# EUROPEAN PATENT APPLICATION

(11) **EP 2 704 032 A2**
(43) Date of publication of application: **05.03.2014**
(21) Application number: 13005551.0
(22) Date of filing: 07.05.2004
(51) Int. Cl.: G06F 17/30, G06F 3/0482, H04N 5/44, H04N 5/445, H04N 21/443, H04N 21/482

(54) **Zoomable graphical user interface for organizing, selecting and launching media items and corresponding method**

(30) Priority: 08.05.2003 US 468830 P; 18.08.2003 US 495998 P; 30.01.2004 US 768422; 30.01.2004 US 768460; 30.01.2004 US 768234; 30.01.2004 US 768432
(62) Divisional of application: 04760954.0
(71) Applicant: Hillcrest Laboratories, Inc., Rockville, MD 20850 (US)
(72) Inventor: Hunleth, Frank A., Rockville, MD 20850 (US); Moshiri, Negar, Bethesda, MD 20816 (US); Napier, William, Germantown, MD 20876 (US); Simpkins, Daniel S., Bethesda, MD 20817 (US); Wroblewski, Frank J., Gaithersburg, MD 20878 (US)
(74) Representative: Diehl & Partner GbR

(57) **Abstract**

A method for interfacing with a plurality of images is disclosed, wherein each of said plurality of images represents a selectable media item, the method comprising: displaying said plurality of images aligned relative to one another in rows and columns at a first semantic level of a user interface; moving a cursor over one of said plurality of images; enlarging said one of said plurality of images in response to said cursor movement, wherein said one of said plurality of images overlaps at least one of said plurality of images at said first semantic level of said user interface; displaying said one of said plurality of images together with additional information associated with said one of said plurality of images while non-displaying the remaining of said plurality of images, after enlarging said one of said plurality of images and prior to launching a media item represented by said one of said plurality of images; receiving a selection input associated with said one of said plurality of images; and launching said media item represented by said one of said plurality of images.

## Description

### BACKGROUND

The present invention describes a framework for organizing, selecting and launching media items. Part of that framework involves the design and operation of graphical user interfaces with the basic building blocks of point, click, scroll, hover and zoom and, more particularly, to graphical user interfaces associated with media items which can be used with a free-space pointing remote.

Technologies associated with the communication of information have evolved rapidly over the last several decades. Television, cellular telephony, the Internet and optical communication techniques (to name just a few things) combine to inundate consumers with available information and entertainment options. Taking television as an example, the last three decades have seen the introduction of cable television service, satellite television service, pay-per-view movies and video-on-demand. Whereas television viewers of the 1960s could typically receive perhaps four or five over-the-air TV channels on their television sets, today's TV watchers have the opportunity to select from hundreds and potentially thousands of channels of shows and information. Video-on-demand technology, currently used primarily in hotels and the like, provides the potential for in-home entertainment selection from among thousands of movie titles. Digital video recording (DVR) equipment such as offered by TiVo, Inc., 2160 Gold Street, Alviso, CA 95002, further expand the available choices.

The technological ability to provide so much information and content to end users provides both opportunities and challenges to system designers and service providers. One challenge is that while end users typically prefer having more choices rather than fewer, this preference is counterweighted by their desire that the selection process be both fast and simple. Unfortunately, the development of the systems and interfaces by which end users access media items has resulted in selection processes which are neither fast nor simple. Consider again the example of television programs. When television was in its infancy, determining which program to watch was a relatively simple process primarily due to the small number of choices. One would consult a printed guide which was formatted, for example, as series of columns and rows which showed the correspondence between (1) nearby television channels, (2) programs being transmitted on those channels and (3) date and time. The television was tuned to the desired channel by adjusting a tuner knob and the viewer watched the selected program. Later, remote control devices were introduced that permitted viewers to tune the television from a distance. This addition to the user-television interface created the phenomenon known as "channel surfing" whereby a viewer could rapidly view short segments being broadcast on a number of channels to quickly learn what programs were available at any given time.

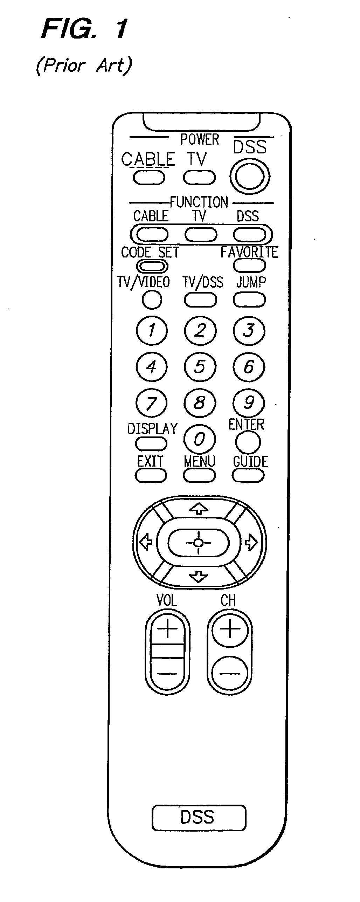

Despite the fact that the number of channels and amount of viewable content has dramatically increased, the generally available user interface and control device options and framework for televisions has not changed much over the last 30 years. Printed guides are still the most prevalent mechanism for conveying programming information. The multiple button remote control with simple up and down arrows is still the most prevalent channel/content selection mechanism. The reaction of those who design and implement the TV user interface to the increase in available media content has been a straightforward extension of the existing selection procedures and interface objects. Thus, the number of rows and columns in the printed guides has been increased to accommodate more channels. The number of buttons on the remote control devices has been increased to support additional functionality and content handling, e.g., as shown in Figure 1. However, this approach has significantly increased both the time required for a viewer to review the available information and the complexity of actions required to implement a selection. Arguably, the cumbersome nature of the existing interface has hampered commercial implementation of some services, e.g., video-on-demand, since consumers are resistant to new services that will add complexity to an interface that they view as already too slow and complex.

In addition to increases in bandwidth and content, the user interface bottleneck problem is being exacerbated by the aggregation of technologies. Consumers are reacting positively to having the option of buying integrated systems rather than a number of segregable components. A good example of this trend is the combination television/VCR/DVD in which three previously independent components are frequently sold today as an integrated unit. This trend is likely to continue, potentially with an end result that most if not all of the communication devices currently found in the household being packaged as an integrated unit, e.g., a television/VCR/DVD/internet access/radio/stereo unit. Even those who buy separate components desire seamless control of and interworking between them. With this increased aggregation comes the potential for more complexity in the user interface. For example, when so-called "universal" remote units were introduced, e.g., to combine the functionality of TV remote units and VCR remote units, the number of buttons on these universal remote units was typically more than the number of buttons on either the TV remote unit or VCR remote unit individually. This added number of buttons and functionality makes it very difficult to control anything but the simplest aspects of a TV or VCR without hunting for exactly the right button on the remote. Many times, these universal remotes do not provide enough buttons to access many levels of control or features unique to certain TVs. In these cases, the original device remote unit is still needed, and the original hassle of handling multiple remotes remains due to user interface issues arising from the complexity of aggregation. Some remote units have addressed this problem by adding "soft" buttons that can be programmed with the expert commands. These soft buttons sometimes have accompanying LCD displays to indicate their action. These too have the flaw that they are difficult to use without looking away from the TV to the remote control. Yet another flaw in these remote units is the use of modes in an attempt to reduce the number of buttons, In these "moded" universal remote units, a special button exists to select whether the remote should communicate with the TV, DVD player, cable set-top box, VCR, etc. This causes many usability issues including sending commands to the wrong device, forcing the user to look at the remote to make sure that it is in the right mode, and it does not provide any simplification to the integration of multiple devices. The most advanced of these universal remote units provide some integration by allowing the user to program sequences of commands to multiple devices into the remote. This is such a difficult task that many users hire professional installers to program their universal remote units.

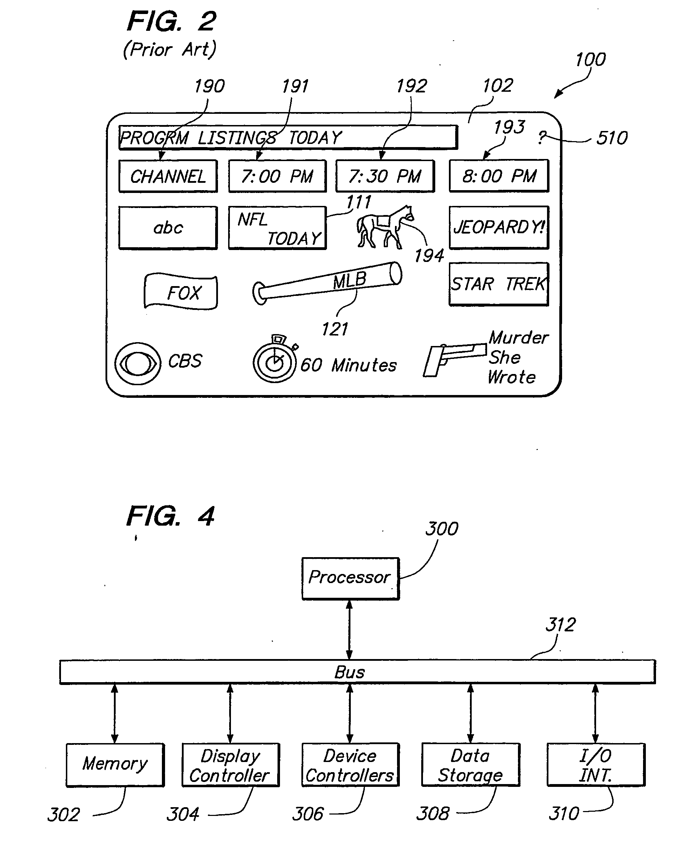

Some attempts have also been made to modernize the screen interface between end users and media systems. Electronic program guides (EPGs) have been developed and implemented to replace the afore-described media guides. Early EPGs provided what was essentially an electronic replica of the printed media guides. For example, cable service operators have provided analog EPGs wherein a dedicated channel displays a slowly scrolling grid of the channels and their associated programs over a certain time horizon, e.g., the next two hours. Scrolling through even one hundred channels in this way can be tedious and is not feasibly scalable to include significant additional content deployment, e.g., video-on-demand. More sophisticated digital EPGs have also been developed. In digital EPGs, program schedule information, and optionally applications/system software, is transmitted to dedicated EPG equipment, e.g., a digital set-top box (STB). Digital EPGs provide more flexibility in designing the user interface for media systems due to their ability to provide local interactivity and to interpose one or more interface layers between the user and the selection of the media items to be viewed. An example of such an interface can be found in U.S. Patent No. 6,421,067 to Kamen et al., the disclosure of which is incorporated here by reference. Figure 2 depicts a GUI described in the '067 patent. Therein, according to the Kamen et al. patent, a first column 190 lists program channels, a second column 191 depicts programs currently playing, a column 192 depicts programs playing in the next half-hour, and a fourth column 193 depicts programs playing in the half hour after that. The baseball bat icon 121 spans columns 191 and 192, thereby indicating that the baseball game is expected to continue into the time slot corresponding to column 192. However, text block 111 does not extend through into column 192. This indicates that the football game is not expected to extend into the time slot corresponding to column 192. As can be seen, a pictogram 194 indicates that after the football game, ABC will be showing a horse race. The icons shown in Figure 2 can be actuated using a cursor, not shown, to implement various features, e.g., to download information associated with the selected programming. Other digital EPGs and related interfaces are described, for example, in U.S. Patent Nos. 6,314,575, 6,412,110, and 6,577,350, the disclosures of which are also incorporated here by reference.

However, the interfaces described above suffer from, among other drawbacks, an inability to easily scale between large collections of media items and small collections of media items. For example, interfaces which rely on lists of items may work well for small collections of media items, but are tedious to browse for large collections of media items. Interfaces which rely on hierarchical navigation (e.g., tree structures) may be more speedy to traverse than list interfaces for large collections of media items, but are not readily adaptable to small collections of media items. Additionally, users tend to lose interest in selection processes wherein the user has to move through three or more layers in a tree structure. For all of these cases, current remote units make this selection processor even more tedious by forcing the user to repeatedly depress the up and down buttons to navigate the list or hierarchies. When selection skipping controls are available such as page up and page down, the user usually has to look at the remote to find these special buttons or be trained to know that they even exist.

Accordingly, it would be desirable to provide organizing frameworks, techniques and systems which simplify the control and screen interface between users and media systems as well as accelerate the selection process, while at the same time permitting service providers to take advantage of the increases in available bandwidth to end user equipment by facilitating the supply of a large number of media items and new services to the user. Moreover, it would be desirable to provide interfaces which supply an easy and fast selection experience regardless of the size(s) of the media item collection(s) being browsed.

### SUMMARY

Systems and methods according to the present invention address these needs and others by providing a total control framework for organizing, selecting and launching media items including an user interface framework which then provides for easy and rapid selection of media items. Control of the framework can employ a free space pointing device that includes a minimal set of buttons and scroll wheel for pointing, clicking and scrolling through selections on an associated graphical user interface. This exemplary graphical user interface (GUI) provides feedback to the user through the use of an on-screen pointer, graphical animations when the pointer hovers over selections, and zooming into and out of selections to smoothly navigate between overview and detail screens. Exemplary embodiments of the present invention employ images, zooming for increased/decreased levels of detail and continuity of GUI objects which permit easy navigation by a user. Graphical user interfaces according to the present invention organize media item selections on a virtual surface. Similar selections can be grouped together. Initially, the interface presents a zoomed out view of the surface, and in most cases, the actual selections will not be visible in full detail at this level. As the user zooms progressively inward, more details are revealed concerning the media item groups or selections. At different zoom levels, different controls are available so that the user can play groups of selections, individual selections, or go to another part of the virtual surface to browse other related media items.

According to one exemplary embodiment of the present invention, a method for displaying information on a graphical user interface includes the steps of: displaying a first plurality of images at a first magnification level, receiving a first selection indication that identifies a subset of the plurality of images, displaying a first zoomed version of the selected subset of the plurality of images at a second magnification level, receiving a second selection indication that identifies an image within the subset of images, and displaying a second zoomed version of the identified image, wherein the second zoomed version of the identified image includes at least one user-actuable control element. The control in this example can include a free-space pointing device using a gyroscope or other mechanism to define both screen position and motion vector to determine the particular command desired. A set of buttons is also included for the "click" or select case as well as a "back" button.

According to another exemplary embodiment of the present invention, a graphical user interface includes a first GUI screen which displays a first plurality of images at a first magnification level, means for receiving a first selection indication that identifies a subset of the plurality of images, a second GUI screen which displays a first zoomed version of the selected subset of the plurality of images at a second magnification level, means for receiving a second selection indication that identifies an image within the subset of images, and a third GUI screen which displays a second zoomed version of the identified image, wherein the second zoomed version of the identified image includes at least one user-actuable control element. Zooming graphical user interfaces according to exemplary embodiments of the present invention can contain categories of images nested to an arbitrary depth as well as categories of categories

### BRIEF DESCRIPTION OF THE DRAWINGS

The accompanying drawings illustrate exemplary embodiments of the present invention, wherein:
FIG. 1 depicts a conventional remote control unit for an entertainment system;
FIG. 2 depicts a conventional graphical user interface for an entertainment system;
FIG. 3 depicts an exemplary media system in which exemplary embodiments of the present invention (both display and remote control) can be implemented;
FIG. 4 shows a system controller of FIG. 3 in more detail;
FIGS. 5-8 depict a graphical user interface for a media system according to an exemplary embodiment of the present invention;
FIG. 9 illustrates an exemplary data structure according to an exemplary embodiment of the present invention;
FIGS. 10(a) and 10(b) illustrate a zoomed out and a zoomed in version of a portion of an exemplary GUI created using the data structure of FIG. 9 according to an exemplary embodiment of the present invention;
FIG. 11 depicts a doubly linked, ordered list used to generated GUI displays according to an exemplary embodiment of the present invention;
FIGS. 12(a) and 12(b) show a zoomed out and a zoomed in version of a portion of another exemplary GUI used to illustrate operation of a node watching algorithm according to an exemplary embodiment of the present invention;
FIGS. 13(a) and 13(b) depict exemplary data structures used to illustrate operation of the node watching algorithm as it the GUI transitions from the view of FIG. 12(a) to the view of FIG. 12(b) according to an exemplary embodiment of the present invention;
FIG. 14 depicts a data structure according to another exemplary embodiment of the present invention including a virtual camera for use in resolution consistent zooming;
FIGS. 15(a) and 15(b) show a zoomed out and zoomed in version of a portion of an exemplary GUI which depict semantic zooming according to an exemplary embodiment of the present invention;
FIGS. 16-20 depict a zoomable graphical user interface according to another exemplary embodiment of the present invention;
FIG. 21 illustrates an exemplary set of overlay controls which can be provided according to exemplary embodiments of and the present invention and;
FIG. 22 illustrates an exemplary framework for implementing zoomable graphical user interfaces according to the present invention.

### DETAILED DESCRIPTION

The following detailed description of the invention refers to the accompanying drawings. The same reference numbers in different drawings identify the same or similar elements. Also, the following detailed description does not limit the invention. Instead, the scope of the invention is defined by the appended claims.

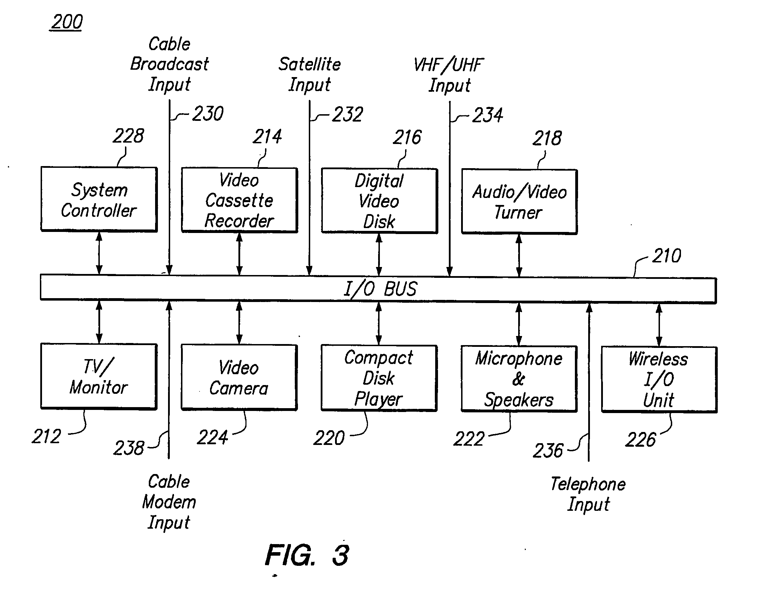

In order to provide some context for this discussion, an exemplary aggregated media system 200 in which the present invention can be implemented will first be described with respect to Figure 3. Those skilled in the art will appreciate, however, that the present invention is not restricted to implementation in this type of media system and that more or fewer components can be included therein. Therein, an input/output (I/O) bus 210 connects the system components in the media system 200 together. The I/O bus 210 represents any of a number of different of mechanisms and techniques for routing signals between the media system components. For example, the I/O bus 210 may include an appropriate number of independent audio "patch" cables that route audio signals, coaxial cables that route video signals, two-wire serial lines or infrared or radio frequency transceivers that route control signals, optical fiber or any other routing mechanisms that route other types of signals.

In this exemplary embodiment, the media system 200 includes a television/monitor 212, a video cassette recorder (VCR) 214, digital video disk (DVD) recorder/playback device 216, audio/video tuner 218 and compact disk player 220 coupled to the I/O bus 210. The VCR 214, DVD 216 and compact disk player 220 may be single disk or single cassette devices, or alternatively may be multiple disk or multiple cassette devices. They may be independent units or integrated together. In addition, the media system 200 includes a microphone/speaker system 222, video camera 224 and a wireless I/O control device 226. According to exemplary embodiments of the present invention, the wireless I/O control device 226 is a media system remote control unit that supports free space pointing, has a minimal number of buttons to support navigation, and communicates with the entertainment system 200 through RF signals. For example, wireless I/O control device 226 can be a free-space pointing device which uses a gyroscope or other mechanism to define both a screen position and a motion vector to determine the particular command desired. A set of buttons can also be included on the wireless I/O device 226 to initiate the "click" primitive described below as well as a "back" button. In another exemplary embodiment, wireless I/O control device 226 is a media system remote control unit, which communicates with the components of the entertainment system 200 through IR signals. In yet another embodiment, wireless I/O control device 134 may be an IR remote control device similar in appearance to a typical entertainment system remote control with the added feature of a track-ball or other navigational mechanisms which allows a user to position a cursor on a display of the entertainment system 100.

The entertainment system 200 also includes a system controller 228. According to one exemplary embodiment of the present invention, the system controller 228 operates to store and display entertainment system data available from a plurality of entertainment system data sources and to control a wide variety of features associated with each of the system components. As shown in Figure 3, system controller 228 is coupled, either directly or indirectly, to each of the system components, as necessary, through I/O bus 210. In one exemplary embodiment, in addition to or in place of I/O bus 210, system controller 228 is configured with a wireless communication transmitter (or transceiver), which is capable of communicating with the system components via IR signals or RF signals. Regardless of the control medium, the system controller 228 is configured to control the media components of the media system 200 via a graphical user interface described below.

As further illustrated in Figure 3, media system 200 may be configured to receive media items from various media sources and service providers. In this exemplary embodiment, media system 200 receives media input from and, optionally, sends information to, any or all of the following sources: cable broadcast 230, satellite broadcast 232 (e.g., via a satellite dish), very high frequency (VHF) or ultra high frequency (UHF) radio frequency communication of the broadcast television networks 234 (e.g., via an aerial antenna), telephone network 236 and cable modem 238 (or another source of Internet content). Those skilled in the art will appreciate that the media components and media sources illustrated and described with respect to Figure 3 are purely exemplary and that media system 200 may include more or fewer of both. For example, other types of inputs to the system include AM/FM radio and satellite radio.

Figure 4 is a block diagram illustrating an embodiment of an exemplary system controller 228 according to the present invention. System controller 228 can, for example, be implemented as a set-top box and includes, for example, a processor 300, memory 302, a display controller 304, other device controllers (e.g., associated with the other components of system 200), one or more data storage devices 308 and an I/O interface 310. These components communicate with the processor 300 via bus 312. Those skilled in the art will appreciate that processor 300 can be implemented using one or more processing units. Memory device(s) 302 may include, for example, DRAM or SRAM, ROM, some of which may be designated as cache memory, which store software to be run by processor 300 and/or data usable by such programs, including software and/or data associated with the graphical user interfaces described below. Display controller 304 is operable by processor 300 to control the display of monitor 212 to, among other things, display GUI screens and objects as described below. Zoomable GUIs according to exemplary embodiments of the present invention provide resolution independent zooming, so that monitor 212 can provide displays at any resolution. Device controllers 306 provide an interface between the other components of the media system 200 and the processor 300. Data storage 308 may include one or more of a hard disk drive, a floppy disk drive, a CD-ROM device, or other mass storage device. Input/output interface 310 may include one or more of a plurality of interfaces including, for example, a keyboard interface, an RF interface, an IR interface and a microphone/speech interface. According to one exemplary embodiment of the present invention, I/O interface 310 will include an interface for receiving location information associated with movement of a wireless pointing device.

Generation and control of a graphical user interface according to exemplary embodiments of the present invention to display media item selection information is performed by the system controller 228 in response to the processor 300 executing sequences of instructions contained in the memory 302. Such instructions may be read into the memory 302 from other computer-readable mediums such as data storage device(s) 308 or from a computer connected externally to the media system 200. Execution of the sequences of instructions contained in the memory 302 causes the processor to generate graphical user interface objects and controls, among other things, on monitor 212. In alternative embodiments, hard-wire circuitry may be used in place of or in combination with software instructions to implement the present invention. As mentioned in the Background section, conventional interface frameworks associated with the television industry are severely limited in their ability to provide users with a simple and yet comprehensive selection experience. Accordingly, control frameworks described herein overcome these limitations and are, therefore, intended for use with televisions, albeit not exclusively. It is also anticipated that the revolutionary control frameworks, graphical user interfaces and/or various algorithms described herein will find applicability to interfaces which may be used with computers and other non-television devices. In order to distinguish these various applications of exemplary embodiments of the present invention, the terms "television" and "TV" are used in this specification to refer to a subset of display devices, whereas the terms "GUI", "GUI screen", "display" and "display screen" are intended to be generic and refer to television displays, computer displays and any other display device. More specifically, the terms "television" and "TV" are intended to refer to the subset of display devices which are able to display television signals (e.g., NTSC signals, PAL signals or SECAM signals) without using an adapter to translate television signals into another format (e.g., computer video formats). In addition, the terms "television" and "TV" refer to a subset of display devices that are generally viewed from a distance of several feet or more (e.g., sofa to a family room TV) whereas computer displays are generally viewed close-up (e.g., chair to a desktop monitor).

Having described an exemplary media system which can be used to implement control frameworks including zoomable graphical interfaces according to the present invention, several examples of such interfaces will now be described. According to exemplary embodiments of the present invention, a user interface displays selectable items which can be grouped by category. A user points a remote unit at the category or categories of interest and depresses the selection button to zoom in or the "back" button to zoom back. Each zoom in, or zoom back, action by a user results in a change in the magnification level and/or context of the selectable items rendered by the user interface on the screen. According to exemplary embodiments, each change in magnification level can be consistent, i.e., the changes in magnification level are provided in predetermined steps. Exemplary embodiments of the present invention also provide for user interfaces which incorporate several visual techniques to achieve scaling to the very large. These techniques involve a combination of building blocks and techniques that achieve both scalability and ease-of-use, in particular techniques which adapt the user interface to enhance a user's visual memory for rapid re-visiting of user interface objects.

The user interface is largely a visual experience. In such an environment exemplary embodiments of the present invention make use of the capability of the user to remember the location of objects within the visual environment. This is achieved by providing a stable, dependable location for user interface selection items. Each object has a location in the zoomable layout. Once the user has found an object of interest it is natural to remember which direction was taken to locate the object. If that object is of particular interest it is likely that the user will re-visit the item more than once, which will reinforce the user's memory of the path to the object. User interfaces according to exemplary embodiments of the present invention provide visual mnemonics that help the user remember the location of items of interest. Such visual mnemonics include pan and zoom animations, transition effects which generate a geographic sense of movement across the user interface's virtual surface and consistent zooming functionality, among other things which will become more apparent based on the examples described below.

Organizing mechanisms are provided to enable the user to select from extremely large sets of items while being shielded from the details associated with large selection sets. Various types of organizing mechanisms can be used in accordance with the present invention and examples are provided below.

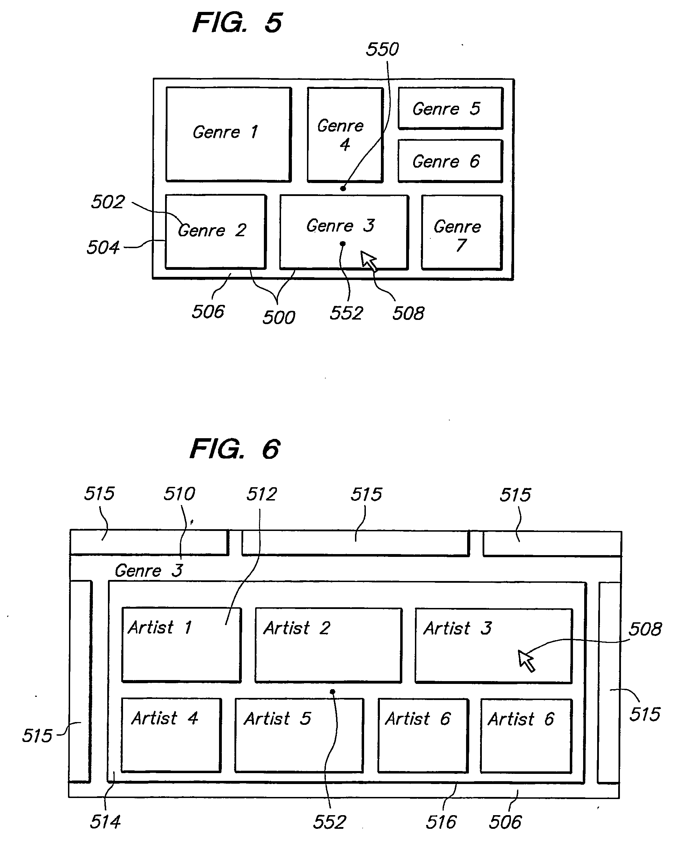

Referring first to Figures 5-8, an exemplary control framework including a zoomable graphical user interface according to an exemplary embodiment of the present invention is described for use in displaying and selecting musical media items. Figure 5 portrays the zoomable GUI at its most zoomed out state. Therein, the interface displays a set of shapes 500. Displayed within each shape 500 are text 502 and/or a picture 504 that describe the group of media item selections accessible via that portion of the GUI. As shown in Figure 5, the shapes 500 are rectangles, and text 502 and/or picture 504 describe the genre of the media. However, those skilled in the art will appreciate that this first viewed GUI grouping could represent other aspects of the media selections available to the user e.g., artist, year produced, area of residence for the artist, length of the item, or any other characteristic of the selection. Also, the shapes used to outline the various groupings in the GUI need not be rectangles. Shrunk down versions of album covers and other icons could be used to provide further navigational hints to the user in lieu of or in addition to text 502 and/or picture 504 within the shape groupings 500. A background portion of the GUI 506 can be displayed as a solid color or be a part of a picture such as a map to aid the user in remembering the spatial location of genres so as to make future uses of the interface require less reading. The selection pointer (cursor) 508 follows the movements of an input device and indicates the location to zoom in on when the user presses the button on the device (not shown in Figure 5).

According to one exemplary embodiment of the present invention, the input device can be a wireless mouse, e.g., the wireless mouse manufactured by Gyration, Inc.12930 Saratoga Avenue, Bldg.C, Saratoga, CA 95070, coupled with a graphical user interface that supports the point, click, scroll, hover and zoom building blocks which are described in more detail below. One feature of this exemplary input device that is beneficial for use in conjunction with the present invention is that it has only two buttons and a scroll wheel, i.e., three input actuation objects. One of the buttons can be configured as a ZOOM IN (select) button and one can be configured as a ZOOM OUT (back) button. Compared with the conventional remote control units, e.g., that shown in Figure 1, the present invention simplifies this aspect of the GUI by greatly reducing the number of buttons, etc., that a user is confronted with in making his or her media item selection. An additional preferred, but not required, feature of input devices according to exemplary embodiments of the present invention is that they provide "free space pointing" capability for the user. The phrase "free space pointing" is used in this specification to refer to the ability of a user to freely move the input device in three (or more) dimensions in the air in front of the display screen and the corresponding ability of the user interface to translate those motions directly into movement of a cursor on the screen. Thus "free space pointing" differs from conventional computer mouse pointing techniques which use a surface other than the display screen, e.g., a desk surface or mousepad, as a proxy surface from which relative movement of the mouse is translated into cursor movement on the computer display screen. Use of free space pointing in control frameworks according to exemplary embodiments of the present invention further simplifies the user's selection experience, while at the same time providing an opportunity to introduce gestures as distinguishable inputs to the interface. A gesture can be considered as a recognizable pattern of movement over time which pattern can be translated into a GUI command, e.g., a function of movement in the x, y, z, yaw, pitch and roll dimensions or any subcombination thereof. Those skilled in the art will appreciate, however that any suitable input device can be used in conjunction with zoomable GUIs according to the present invention. Other examples of suitable input devices include, but are not limited to, trackballs, touchpads, conventional TV remote control devices, speech input, any devices which can communicate/translate a user's gestures into GUI commands, or any combination thereof. It is intended that each aspect of the GUI functionality described herein can be actuated in frameworks according to the present invention using at least one of a gesture and a speech command. Alternate implementations include using cursor and/or other remote control keys or even speech input to identify items for selection.

Figure 6 shows a zoomed in view of Genre 3 that would be displayed if the user selects Genre 3 from Figure 5, e.g., by moving the cursor 508 over the area encompassed by the rectangle surrounding Genre 3 on display 212 and depressing a button on the input device. The interface can animate the zoom from Figure 5 to Figure 6 so that it is clear to the user that a zoom occurred. An example of such an animated zoom/transition effect is described below. Once the shape 516 that contains Genre 3 occupies most of the screen on display 212, the interface reveals the artists that have albums in the genre. In this example, seven different artists and/or their works are displayed. The unselected genres 515 that were adjacent to Genre 3 in the zoomed out view of Figure 5 are still adjacent to Genre 3 in the zoomed in view, but are clipped by the edge of the display 212. These unselected genres can be quickly navigated to by selection of them with selection pointer 508. It will be appreciated, however, that other exemplary embodiments of the present invention can omit clipping neighboring objects and, instead, present only the unclipped selections. Each of the artist groups, e.g., group 512, can contain images of shrunk album covers, a picture of the artist or customizable artwork by the user in the case that the category contains playlists created by the user.

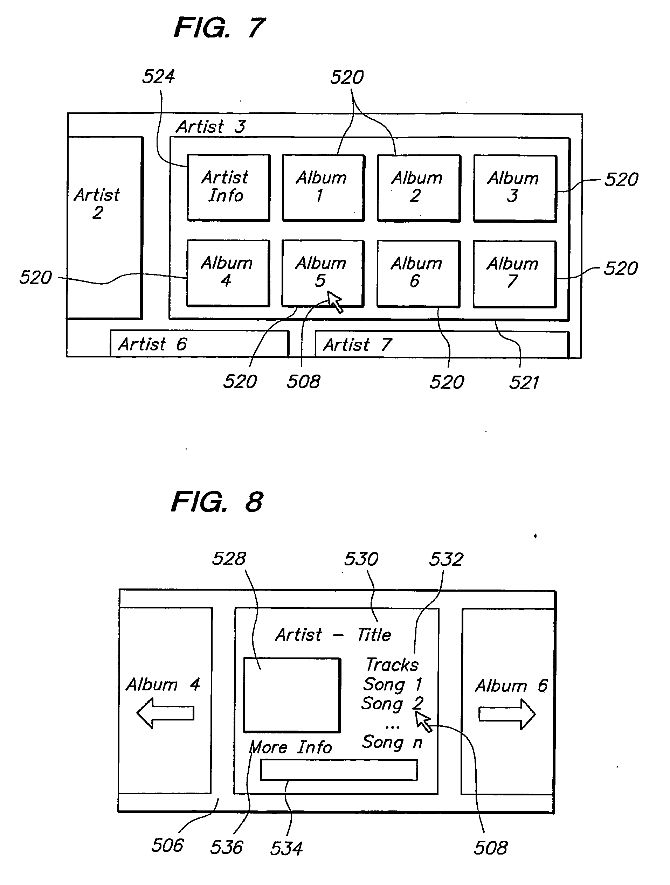

A user may then select one of the artist groups for further review and/or selection. Figure 7 shows a further zoomed in view in response to a user selection of Artist 3 via positioning of cursor 508 and actuation of the input device, in which images of album covers 520 come into view. As with the transition from the GUI screen of Figure 5 and Figure 6, the unselected, adjacent artists (artists #2, 6 and 7 in this example) are shown towards the side of the zoomed in display, and the user can click on these with selection pointer 508 to pan to these artist views. In this portion of the interface, in addition to the images 520 of album covers, artist information 524 can be displayed as an item in the artist group. This information may contain, for example, the artist's picture, biography, trivia, discography, influences, links to web sites and other pertinent data. Each of the album images 520 can contain a picture of the album cover and, optionally, textual data. In the case that the album image 520 includes a user created playlist, the graphical user interface can display a picture which is selected automatically by the interface or preselected by the user.

Finally, when the user selects an album cover image 520 from within the group 521, the interface zooms into the album cover as shown in Figure 8. As the zoom progresses, the album cover can fade or morph into a view that contains items such as the artist and title of the album 530, a list of tracks 532, further information about the album 536, a smaller version of the album cover 528, and controls 534 to play back the content, modify the categorization, link to the artists web page, or find any other information about the selection. Neighboring albums 538 are shown that can be selected using selection pointer 508 to cause the interface to bring them into view. As mentioned above, alternative embodiments of the present invention can, for example, zoom in to only display the selected object, e.g., album 5 , and omit the clipped portions of the unselected objects, e.g., albums 4 and 6. This final zoom provides an example of semantic zooming, wherein certain GUI elements are revealed that were not previously visible at the previous zoom level. Various techniques for performing semantic zooming according to exemplary embodiments of the present invention are provided below.

As illustrated in the Figures 5-8 and the description, this exemplary embodiment of a graphical user interface provides for navigation of a music collection. Interfaces according to the present invention can also be used for video collections such as for DVDs, VHS tapes, other recorded media, video-on-demand, video segments and home movies. Other audio uses include navigation of radio shows, instructional tapes, historical archives, and sound clip collections. Print or text media such as news stories and electronic books can also be organized and accessed using this invention.

As will be apparent to those skilled in the art from the foregoing description, zoomable graphical user interfaces according to the present invention provide users with the capability to browse a large (or small) number of media items rapidly and easily. This capability is attributable to many characteristics of interfaces according to exemplary embodiments of the present invention including, but not limited to: (1) the use of images as all or part of the selection information for a particular media item, (2) the use of zooming to rapidly provide as much or as little information as a user needs to make a selection and (3) the use of several GUI techniques which combine to give the user the sense that the entire interface resides on a single plane, such that navigation of the GUI can be accomplished, and remembered, by way of the user's sense of direction. This latter aspect of GUIs according to the present invention can be accomplished by, among other things, linking the various GUI screens together "geographically" by maintaining as much GUI object continuity from one GUI screen to the next, e.g., by displaying edges of neighboring, unselected objects around the border of the current GUI screen. Alternatively, if a cleaner view is desired, and other GUI techniques provide sufficient geographic feedback, then the clipped objects can be omitted. As used in this text, the phrase "GUI screen" refers to a set of GUI objects rendered on one or more display units at the same time. A GUI screen may be rendered on the same display which outputs media items, or it may be rendered on a different display. The display can be a TV display, computer monitor or any other suitable GUI output device.

Another GUI effect which enhances the user's sense of GUI screen connectivity is the panning animation effect which is invoked when a zoom is performed or when the user selects an adjacent object at the same zoom level as the currently selected object. Returning to the example of Figure 5, as the user is initially viewing this GUI screen, his or her point-of-view is centered about point 550. However, when he or she selects Genre 3 for zooming in, his or her point-of-view will shift to point 552. According to exemplary embodiments of the present invention, the zoom in process is animated to convey the shifting the POV center from point 550 to 552. This panning animation can be provided for every GUI change, e.g., from a change in zoom level or a change from one object to another object on the same GUI zoom level. Thus if, for example, a user situated in the GUI screen of Figure 6 selected the leftmost unselected genre 515 (Genre 2), a panning animation would occur which would give the user the visual impression of "moving" left or west. Exemplary embodiments of the present invention employ such techniques to provide a consistent sense of directional movement between GUI screens enables users to more rapidly navigate the GUI, both between zoom levels and between media items at the same zoom level.

Various data structures and algorithms can be used to implement zoomable GUIs according to the present invention. For example, data structures and algorithms for panning and zooming in an image browser which displays photographs have been described, for example, in the article entitled "Quantum Treemaps and Bubblemaps for a Zoomable Image Browser" by Benjamin B. Bederson, UIST 2001, ACM Symposium on User Interface Software and Technology, CHI Letters, 3(2), pp. 71-80, the disclosure of which is incorporated here by reference. However, in order to provide a GUI for media selection which can, at a high level, switch between numerous applications and, at a lower level, provide user controls associated with selected images to perform various media selection functions, additional data structures and algorithms are needed.

Zoomable GUIs can be conceptualized as supporting panning and zooming around a scene of user interface components in the view port of a display device. To accomplish this effect, zoomable GUIs according to exemplary embodiments of the present invention can be implemented using scene graph data structures. Each node in the scene graph represents some part of a user interface component, such as a button or a text label or a group of interface components. Children of a node represent graphical elements (lines, text, images, etc.) internal to that node. For example, an application can be represented in a scene graph as a node with children for the various graphical elements in its interface. Two special types of nodes are referred to herein as cameras and layers. Cameras are nodes that provide a view port into another part of the scene graph by looking at layer nodes. Under these layer nodes user interface elements can be found. Control logic for a zoomable interface programmatically adjusts a cameras view transform to provide the effect of panning and zooming.

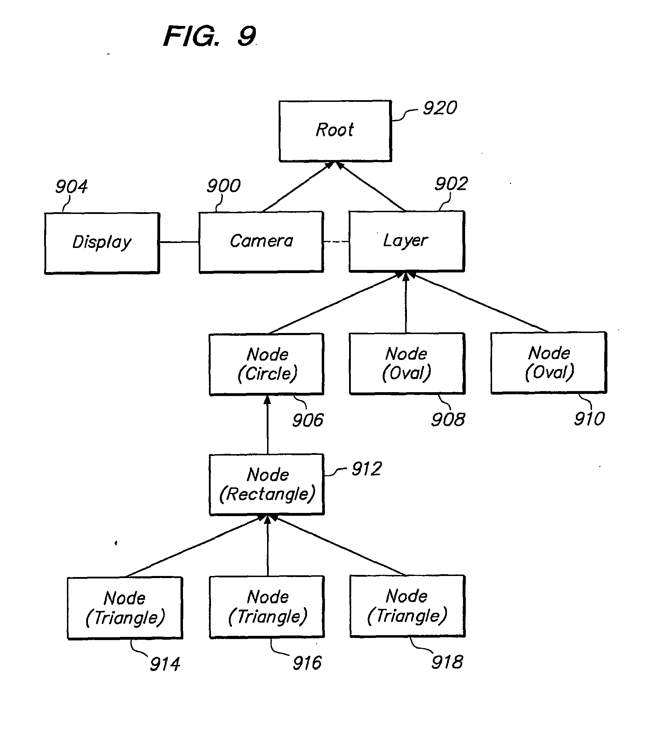

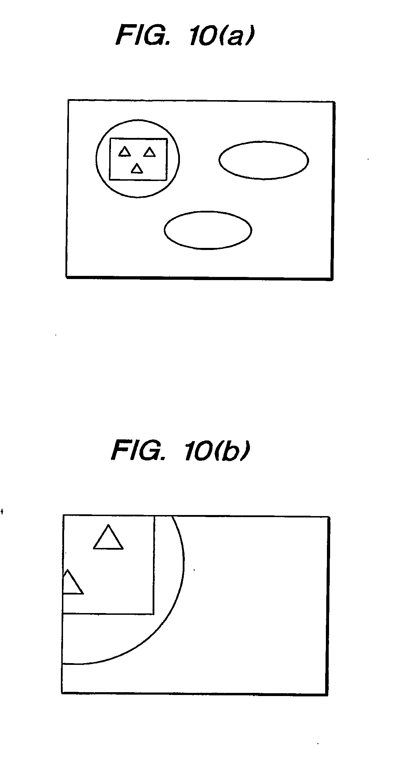

Figure 9 shows a scene graph that contains basic zoomable interface elements which can be used to implement exemplary embodiments of the present invention, specifically it contains one camera node 900 and one layer node 902. The dotted line between the camera node 900 and layer node 902 indicates that the camera node 900 has been configured to render the children of the layer node 902 in the camera's view port. The attached display device 904 lets the user see the camera's view port. The layer node 902 has three children nodes 904 that draw a circle and a pair of ovals. The scene graph further specifies that a rectangle is drawn within the circle and three triangles within the rectangle by way of nodes 912-918. The scene graph is tied into other scene graphs in the data structure by root node 920. Each node 906-918 has the capability of scaling and positioning itself relative to its parent by using a local coordinate transformation matrix. Figures 10(a) and 10(b) illustrate what the scene graph appears like when rendered through the camera at a first, zoomed out level of magnification and a second, zoomed in level of magnification, respectively.

Rendering the scene graph can be accomplished as follows. Whenever the display 904 needs to be updated, e.g., when the user triggers a zoom-in from the view of Figure 10(a) to the view of Figure 10(b), a repaint event calls the camera node 900 attached to the display 904 to render itself. This, in turn, causes the camera node 900 to notify the layer node 902 to render the area within the camera's view port. The layer node 902 renders itself by notifying its children to render themselves, and so on. The current transformation matrix and a bounding rectangle for the region to update is passed at each step and optionally modified to inform each node of the proper scale and offset that they should use for rendering. Since the scene graphs of applications operating within zoomable GUIs according to the present invention may contain thousands of nodes, each node can check the transformation matrix and the area to be updated to ensure that their drawing operations will indeed be seen by the user. Although the foregoing example, describes a scene graph including one camera node and one layer node, it will be appreciated that exemplary embodiments of the present invention can embed multiple cameras and layers. These embedded cameras can provide user interface elements such as small zoomed out maps that indicate the user's current view location in the whole zoomable interface, and also allow user interface components to be independently zoomable and pannable.

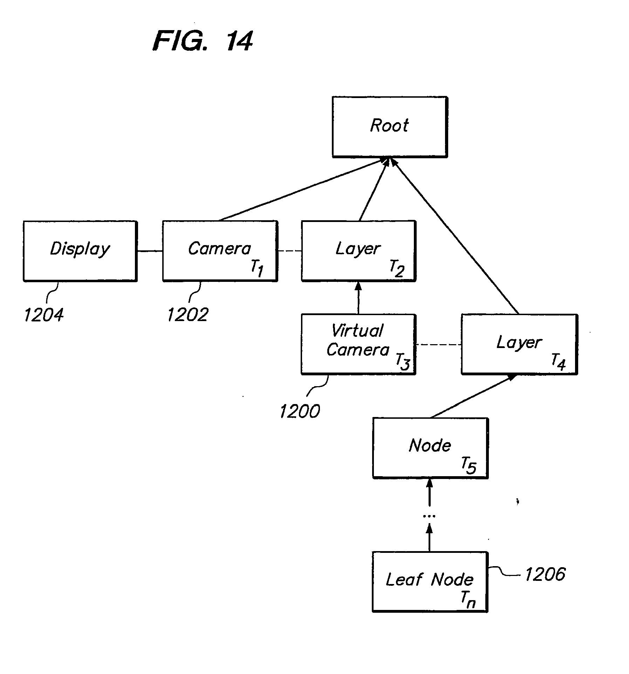

When using a zoomable interface to coordinate the operation of multiple applications, e.g., like the exemplary movie browser described below with respect to Figures 14-18, the memory and resource requirements for each application may exceed the total memory available in the media system. This suggests that applications unload some or all of their code and data when the user is no longer viewing them. However, in zoomable GUIs according to the present invention it can be desirable to provide the appearance that some or all of the applications appear active to the user at all times. To satisfy these two competing objectives, the applications which are "off-screen" from the user's point of view can be put into a temporarily suspended state. To achieve this behavior in zoomable GUIs according to exemplary embodiments of the present invention, events are sent to applications to indicate when they enter and exit a view port. One way to implement such events is to add logic to the code that renders a component so that it detects when the user enters a view port. However, this implies that the notification logic gets invoked at every rendering event and, more importantly, that it cannot easily detect when the user has navigated the view port away from the component. Another method for sending events to applications is to incorporate the notification logic into the GUI navigation elements (such as hyperlinks and buttons), so that they send notifications to the component when they change the view port of a camera to include the component of interest. However, this requires the programmer to vigilantly add notification code to all possible navigation UI elements.

According to one exemplary embodiment, a computationally efficient node watcher algorithm can be used to notify applications regarding when GUI components and/or applications enter and exit the view of a camera. At a high level, the node watcher algorithm has three main processing stages: (1) initialization, (2) view port change assessment and (3) scene graph change assessment. The initialization stage computes node quantities used by the view port change assessment stage and initializes appropriate data structures. The view port change assessment stage gets invoked when the view port changes and notifies all watched nodes that entered or exited the view port. Finally, the scene graph change assessment stage updates computations made at the initialization stage that have become invalid due to changes in the scene graph. For example, if an ancestor node of the watched node changes location in the scene graph, computations made at initialization may need to be recomputed.

Of these stages, view port change assessment drives the rest of the node watcher algorithm. To delineate when a node enters and exits a view port, the initialization step determines the bounding rectangle of the desired node and transforms it from its local coordinate system to the local coordinate system of the view port. In this way, checking node entrance does not require a sequence of coordinate transformations at each view port change. Since the parents of the node may have transform matrices, this initialization step requires traversing the scene graph from the node up to the camera. As described below, if embedded cameras are used in the scene graph data structure, then multiple bounding rectangles may be needed to accommodate the node appearing in multiple places.

Once the bounding rectangle for each watched node has been computed in the view port coordinate system, the initialization stage adds the bounding rectangle to the view port change assessment data structures. The node watcher algorithm uses a basic building block for each dimension in the scene. In zoomable interfaces according to some exemplary embodiments, this includes an x dimension, a y dimension, and a scale dimension. As described below, however, other exemplary implementations may have additional or different dimensions. The scale dimension describes the magnification level of the node in the view port and is described by the following equation: $s = \frac{dʹ}{d}$

Where *s* is the scale, d is the distance from one point of the node to another in the node's local coordinates and d' is the distance from that point to the other in the view port.

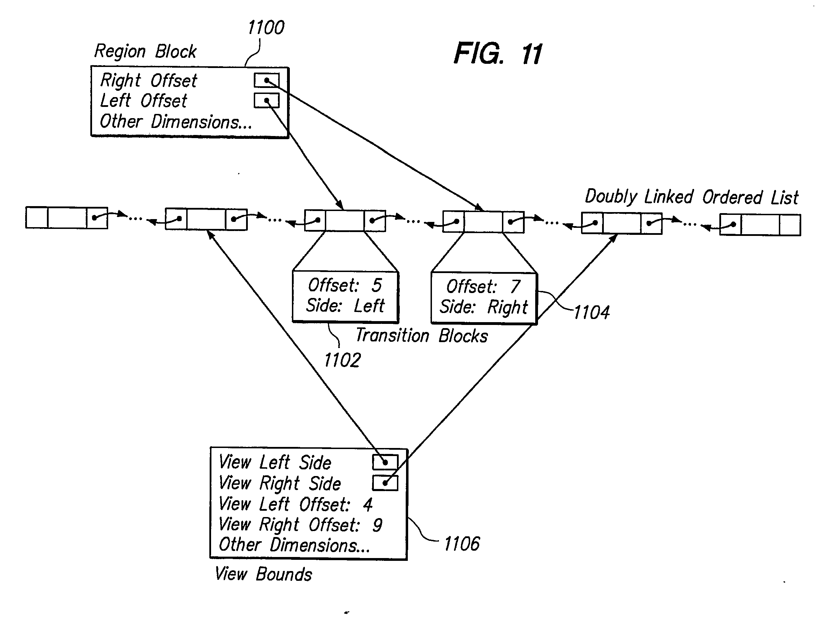

Figure 11 shows an exemplary building block for detecting scene entrance and exit in one dimension. The following describes handling in the x dimension, but those skilled in the art will appreciate that the other dimensions can be handled in a similar manner. The Region Block 1100 contains references to the transformed bounding rectangle coordinates. This includes the left and right (top and bottom or minimum and maximum scale) offsets of the rectangle. The left and right offsets are stored in Transition Blocks 1102 and 1104, respectively, that are themselves placed in an ordered doubly linked list, such that lower numbered offsets are towards the beginning. The current view port bounds are stored in the View Bounds block 1106. Block 1106 has pointers to the Transition Blocks just beyond the left and right side of the view, e.g., the Transition Block immediately to the right of the one pointed to by View Left Side is in the view unless that latter block is pointed to by View Right Side.

When the view port changes, the following processing occurs for each dimension. First, the View Left Side and View Right Side pointers are checked to see if they need to be moved to include or exclude a Transition Block. Next, if one or both of the pointers need to be moved, they are slid over the Transition Block list to their new locations. Then, for each Transition Block passed by the View Left Side and View Right Side pointers, the node watcher algorithm executes the Transition Block notification code described below. This notification code determines if it is possible that its respective node may have entered or exited the view port. If so, that node is added to a post processing list. Finally, at the end of this processing for each dimension, each node on the post processing list is checked that its view port status actually did change (as opposed to changing and then changing back). If a change did occur, then the algorithm sends an event to the component. Note that if the view port jumps quickly to a new area of the zoomable interface that the algorithm may detect more spurious entrance and exit events.

The Transition Block notification code can be implemented as a table lookup that determines whether the node moved into or out of the view port for the dimension being checked. An exemplary table is shown below.

**Table 1 - Transition Notification Table**

| **Node side** | **View side** | **View Move Direction** | **Partial Intersection Notification** | **Full Intersection Notification** |
|---|---|---|---|---|
| Left | Left | Left | None | Enter |
| Left | Left | Right | None | Exit |
| Right | Left | Left | Enter | None |
| Right | Left | Right | Exit | None |
| Left | Right | Left | Exit | None |
| Left | Right | Right | Enter | None |
| Right | Right | Left | None | Exit |
| Right | Right | Right | None | Enter |

Columns 1, 2 and 3 are the inputs to the Transition Notification Table. Specifically, the node watcher algorithm addresses the table using a combination of the node side, view side and view move direction to determine whether the node being evaluated was entered, exited or not impacted. Column 1 refers to the side of the node represented by the Transition Block that was passed by the view port pointers. Column 2 refers to the side of the view port and column 3 refers to the direction that that side of the view port was moving when it passed the node's Transition Block. Either output column 4 or 5 is selected depending upon whether the node should be notified when it is partially or fully in,view. For example, in some implementations it may be desirable to notify an application such as a streaming video window only after it is fully in view since loading a partially-in-view video window into the zoomable GUI may be visually disruptive.

When the output of the table indicates enter or exit, the node watcher algorithm adds the node to the post processing list. The output columns of Table 1 are populated based on the following rules. If the node intersects in all dimensions then an enter notification will be sent in the post processing step. If the node was in the view and now one or more dimensions have stopped intersecting, then an exit notification will be sent. To reduce the number of nodes in the post processing list, the Transition Block notification code checks for intersection with other dimensions before adding the node to the list. This eliminates the post processing step when only one or two dimensions out of the total number of dimensions, e.g., three or more, intersect. When a user interface object (e.g., an application) wants to be notified of its view port status in the GUI, it registers a function with the node watcher algorithm. When the application goes into or out of the view, the node watcher algorithm calls that application's registered function with a parameter that indicates what happened. Alternatively, notification can be performed using message passing. In this case, each application has an event queue. The application tells the node watcher algorithm how to communicate with its event queue. For example, it could specify the queue's address. Then, when the node watcher detects a transition, it creates a data structure that contains the cause of the notification and places it in the application's queue.

In addition to using node watcher notifications for application memory management, this algorithm can also be used for other functions in zoomable GUIs according to the present invention. For example, the node watcher algorithm can be used to change application behavior based on the user's view focus, e.g., by switching the audio output focus to the currently viewed application. Another application for the node watcher algorithm is to load and unload higher resolution and composite images when the magnification level changes. This reduces the computational load on the graphics renderer by having it render fewer objects whose resolution more closely matches the display. In addition to having the node watcher algorithm watch a camera's view port, it is also useful to have it watch the navigation code that tells the view port where it will end up after an animation. This provides earlier notification of components that are going to come into view and also enables zoomable GUIS according to exemplary embodiments of the present invention to avoid sending notifications to nodes that are flown over due to panning animations.

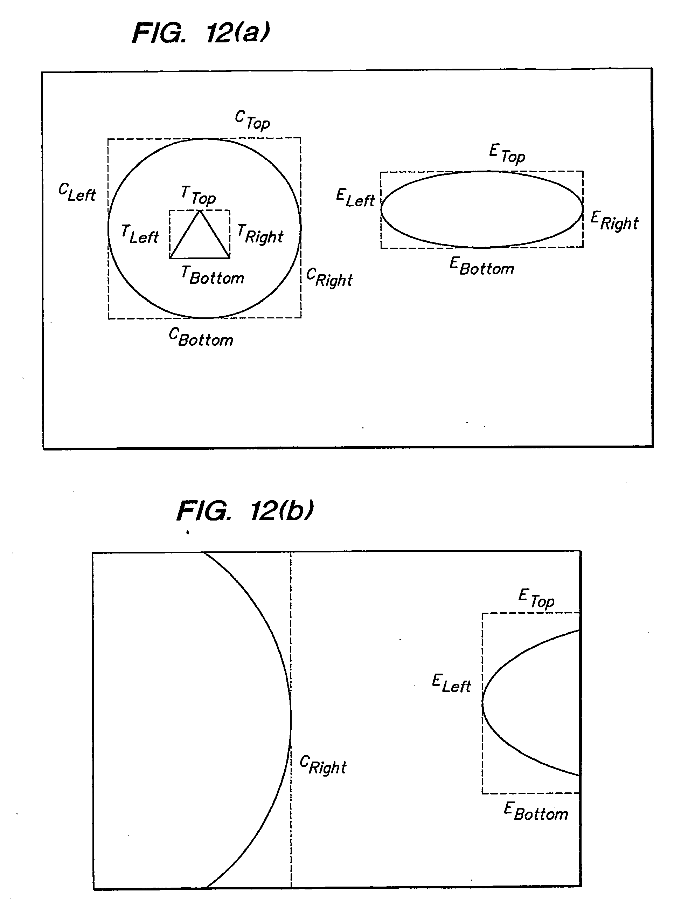

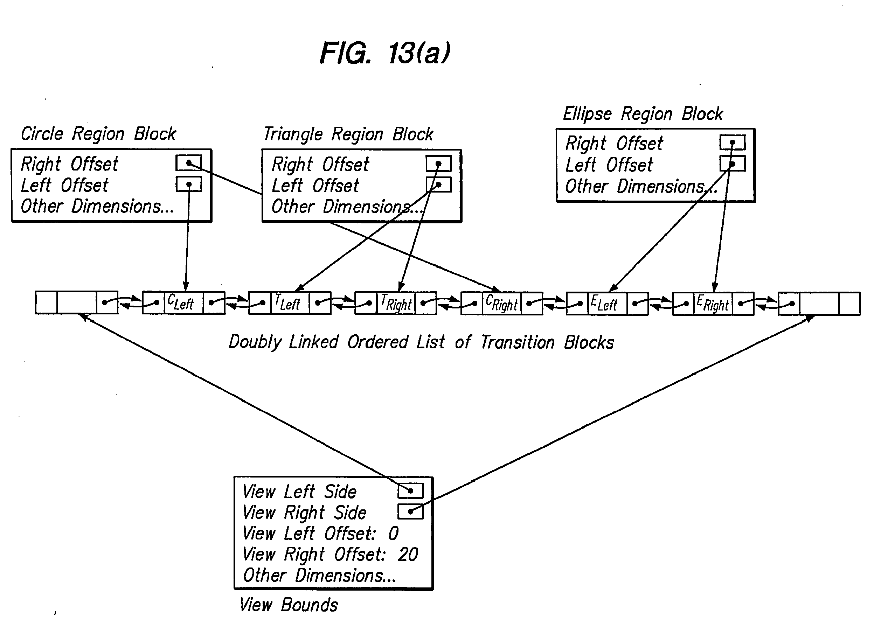

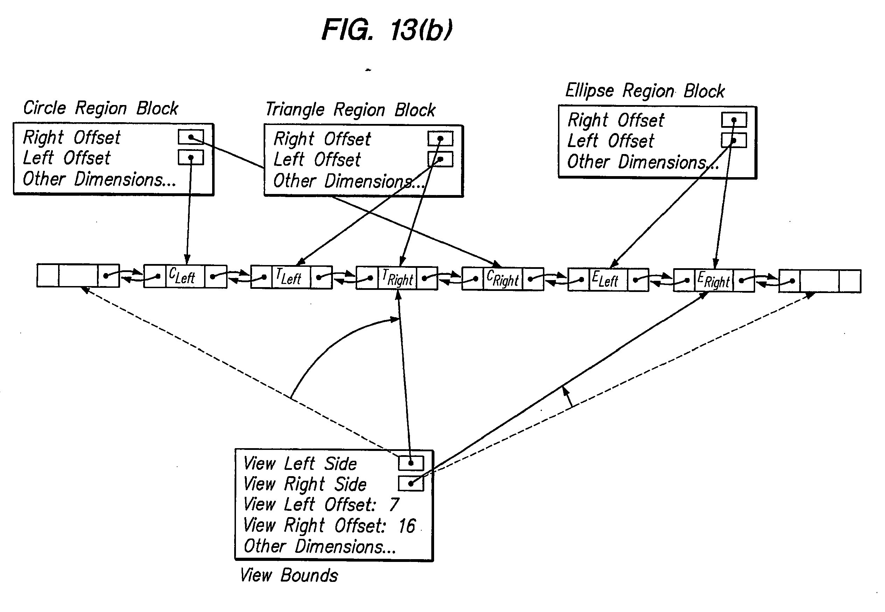

To better understand operation of the node watcher algorithm, an example will now be described with reference to Figures 12(a), 12(b), 13(a) and 13(b). Figures 12(a) and 12(b) depict a portion of a zoomable GUI at two different magnification levels. At the lower magnification level of Figure 12(a), three nodes are visible: a circle, a triangle and an ellipse. In Figure 12(b), the view has been zoomed in so much that the ellipse and circle are only partially visible, and the triangle is entirely outside of the view. These nodes may, for example, represent applications or user interface components that depend on efficient event notification and, therefore, are tracked by the node watcher algorithm according to exemplary embodiments of the present invention. In this example, the bounding rectangles for each node are explicitly illustrated in Figures 12(a) and 12(b) although those skilled in the art will appreciate that the bounding rectangles would not typically be displayed on the GUI. Each side of each of the bounding rectangles has been labeled in Figures 12(a) and 12(b), and these labels will be used to show the correspondence between the bounding rectangle sides and the transition block data structure which were described above.

Figure 13(a) shows exemplary node watcher data structures for the horizontal dimension for the zoomed out view of Figure 12(a). Therein, each side of a node's bounding rectangle is represented using a transition block. The horizontal transition blocks are shown in Figure 13(a) in the order that they appear on the GUI screen from left to right. For example, the left side of the circle, C_{Left}, comes first and then the left side of the triangle, TL_{eft}, and so on until the right side of the ellipse, E_{Right}. Both ends of the list are marked with empty sentinel transition blocks. Also shown in Figure 13(a) are the region blocks for each node and their corresponding pointers to their bounding rectangle's horizontal transition blocks. At the bottom of Figure 13(a) is the view bounds data structure that contains pointers to the transition blocks that are just outside of the current view. For the zoomed out view, all nodes are completely visible, and therefore all of their transition blocks are between the transition blocks pointed to by the view bounds data structure.

Figure 13(b) shows the node watcher data structures for the zoomed in view of Figure 12(b). Therein, it can be seen that the view bounds part of the data structure has changed so that it now points to the transition blocks for the right side of the triangle, T_{Right}, and the right side of the ellipse, E_{Right}, since these two bounding rectangle sides are just outside of the current (zoomed in) view.

Given these exemplary data structures and GUI scenes, the associated processing within the node watcher algorithm while the zoom transition occurs can be described as follows. Starting with the left side of the view, the node watcher algorithm moves the view left side pointer to the right until the transition block that is just outside of the view on the left side is reached. As shown in Figure 13(b), the view left side pointer first passes the C_{Left} transition block. For this example, assume that the circle node represents an application or other user interface object associated with the zoomable GUI that requires a notification when it is not fully visible in the view. Given these inputs to the node watcher algorithm, Table 1 indicates that the circle node should receive an exit notification for the horizontal dimension. Of course, the node watcher algorithm will typically aggregate notifications from all dimensions before notifying the node to avoid sending redundant exit notifications. Next, the view left side pointer passes the left side of the triangle, T_{Left}. If the triangle node has requested notifications for when it completely leaves the view, then the node watcher algorithm indicates per Table 1 that no notification is necessary. However, when the view pointer passes T_{Right}, Table 1 indicates that the triangle has exited the view entirely and should be notified. The view pointer stops here since the right side of the circle's bounding rectangle, C_{Right}, is still visible in the view.

From the right side, the node watcher algorithm's processing is similar. The view right side pointer moves left to the ellipse's right side E_{Right}. Depending on whether the ellipse has requested full or partial notifications, the node watcher algorithm will or will not send a notification to the ellipse pursuant to Table 1. The vertical dimension can be processed in a similar manner using similar data structures and the top and bottom boundary rectangle values. Those skilled in the arts will also appreciate that a plurality of boundary rectangles can be used to approximate non-rectangular nodes when more precise notification is required. Additionally, the present invention contemplates that movement through other dimensions can be tracked and processed by the node watcher algorithm, e.g., a third geometrical (depth or scale) dimension, as well as non-geometrical dimensions such as time, content rating (adult, PG-13, etc.) and content type (drama, comedy, etc). Depending on the number of dimensions in use, the algorithm, more accurately, detects intersections of boundary segments, rectangles, and n-dimensional hypercubes.

In addition to the node watcher algorithm described above, exemplary embodiments of the present invention provide resolution consistent semantic zooming algorithms which can be used in zoomable GUIs according to exemplary embodiments of the present invention. Semantic zooming refers to adding, removing or changing details of a component in a zoomable GUI depending on the magnification level of that component. For example, in the movie browser interface described below, when the user zooms close enough to the image of the movie, it changes to show movie metadata and playback controls. The calculation of the magnification level is based on the number of pixels that the component uses on the display device. The zoomable GUI can store a threshold magnification level which indicates when the switch should occur, e.g., from a view without the movie metadata and playback controls to a view with the movie metadata and playback controls.

Television and computer displays have widely varying display resolutions. Some monitors have such a high resolution that graphics and text that is readable on a low resolution display is so small to become completely unreadable. This also creates a problem for applications that use semantic zooming, especially on high resolution displays such as HDTVs. In this environment, semantic zooming code that renders based on the number of pixels displayed will change the image before the more detailed view is readable. Programmatically modifying the threshold at which semantic zooming changes component views can only work for one resolution.

The desirable result is that semantic zooming occurs consistently across all monitor resolutions. One solution is to use lower resolution display modes on high resolution monitors, so that the resolution is identical on all displays. However, the user of a high resolution monitor would prefer that graphics would be rendered at their best resolution if semantic zooming would still work as expected. Accordingly, exemplary embodiments of the present invention provide a semantic zooming technique which supports displays of all different solutions without the previously stated semantic viewing issues. This can be accomplished by, for example, creating a virtual display inside of the scene graph. This is shown in Figure 14 by using an embedded virtual camera node 1200 and adding logic to compensate for the display resolution. The virtual camera node 1200 defines a view port whose size maps to the user's view distance and monitor size. For example, a large virtual camera view port indicates that a user is either sitting close enough to the monitor or has a large enough monitor to resolve many details. Alternately, a small view port indicates that the user is farther away from the monitor and requires larger fonts and image. The zoomable GUI code can base the semantic zooming transitions on the magnification level of components seen on this virtual camera and using the user's preferred viewing conditions.

The main camera node 1202 that is attached to the display device 1204 has its view port configured so that it displays everything that the virtual camera 1200 is showing. Since graphics images and text are not mapped to pixels until this main camera 1202, no loss of quality occurs from the virtual camera. The result of this is that high definition monitors display higher quality images and do not trigger semantic zooming changes that would make the display harder to read.

According to one exemplary embodiment of the present invention, the process works as follows. Each camera and node in the scene graph has an associated transform matrix (T₁ to Tₙ). These matrices transform that node's local coordinate system to that of the next node towards the display. In the figure, T₁ transforms coordinates from its view port to display coordinates. Likewise, T₂ transforms its local coordinate system to the camera's view port. If the leaf node 1206 needs to render something on the display, it computes the following transform matrix: $A = {T}_{1} ⁢ {T}_{2} ⋯ {T}_{n}$

This calculation can be performed while traversing the scene graph. Since the component changes to support semantic zooming are based on the virtual camera 1200, the following calculation is performed: $B = {T}_{4} ⁢ {T}_{5} ⋯ {T}_{n}$

Typically, T₁ to T₃ can be determined ahead of time by querying the resolution of the monitor and inspecting the scene graph. Determining B *from A* is, therefore, accomplished by inverting these matrices and multiplying as follows: $B = {\left({T}_{1}⁢{T}_{2}⁢{T}_{3}\right)}^{- 1} ⁢ A$

For the case when calculating T₁ to T₃ ahead of time is problematic, e.g., if a graphics API hides additional transformations, logic can be added to the virtual camera to intercept the transformation matrix that it would have used to render to the display. This intercepted transformation is then inverted and multiplied as above to compute the semantic zooming threshold.

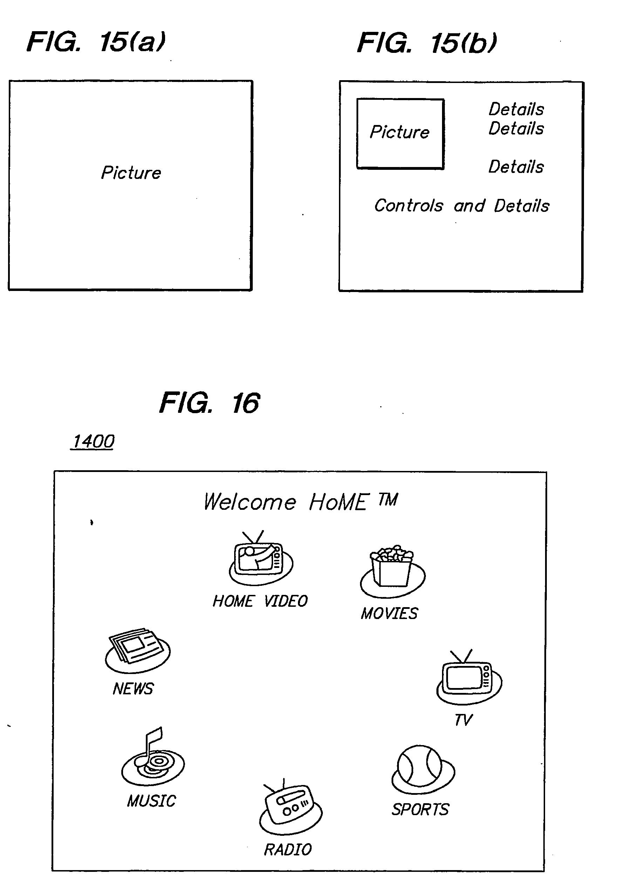

One strength of zoomable interfaces according to exemplary embodiments of the present invention is the ability to maintain context while navigating the interface. All of the interface components appear to exist in the zoomable world, and the user just needs to pan and zoom to reach any of them. The semantic zooming technique described above changes the appearance of a component depending on the zoom or magnification level. Figures 15(a) and 15(b) provide an example of semantic zooming for a component where the zoomed out version of the component (Figure 15(a)) is a picture and the zoomed in version (Figure 15(b)) includes the same picture as well as some controls and details. Some more detailed examples of this are provided below. One challenge associated with semantic zooming is that changes between views can occur abruptly, and transition techniques such as alpha blending do not provide visually pleasing results when transitioning between two such views.

Accordingly, exemplary embodiments of the present invention provide for some common image or text in all views of a component to provide a focal point for a transition effect when a semantic zoom is performed. For example, in Figures 15(a) and 15(b), the common element is the picture. The transition effect between the zoomed out version and the zoomed in version can be triggered using, for example, the above-described node watcher algorithm as follows. First, a registration with the node watcher can be performed to receive an event when the main camera's view port transitions from the magnification level of the zoomed out version of the component to the zoomed in version. Then, when the event occurs, an animation can be displayed which shows the common element(s) shrinking and translating from their location in the zoomed out version to their location in the zoomed in version. Meanwhile, the camera's view port continues to zoom into the component.

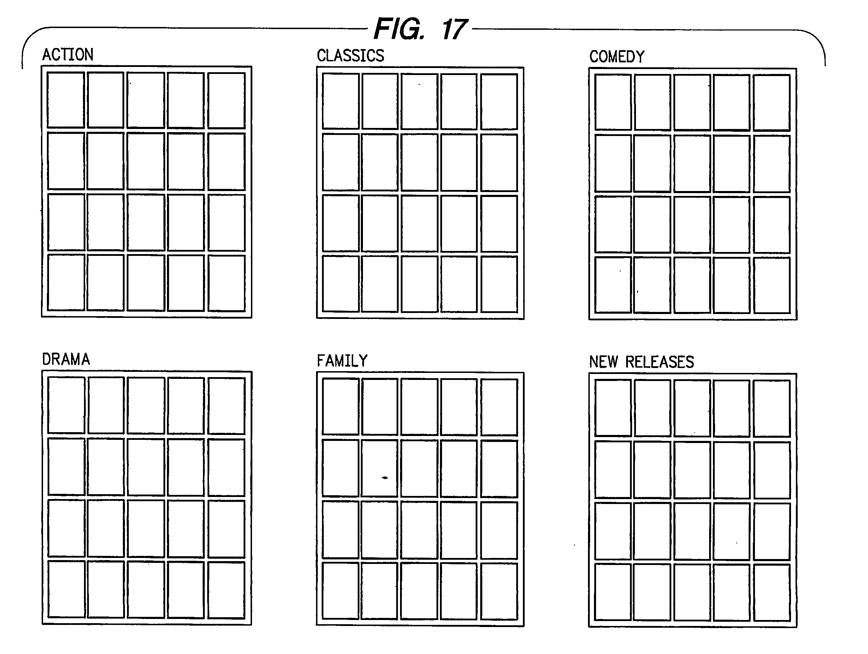

These capabilities of graphical user interfaces according to the present invention will become even more apparent upon review of another exemplary embodiment described below with respect to Figures 16-20. Therein, a startup GUI screen 1400 displays a plurality of organizing objects which operate as media group representations. The purely exemplary media group representations of home video, movies, TV, sports, radio, music and news could, of course include different, more or fewer media group representations. Upon actuation of one of these icons by a user, the GUI according to this exemplary embodiment will then display a plurality of images each grouped into a particular category or genre. For example, if the "movie" icon in Figure 16 was actuated by a user, the GUI screen of Figure 17 can then be displayed. Therein, a large number, e.g., 120 or more, selection objects are displayed. These selection objects can be categorized into particular group(s), e.g., action, classics, comedy, drama, family and new releases. Those skilled in the art will appreciate that more or fewer categories could be provided. In this exemplary embodiment, the media item images can be cover art associated with each movie selection. Although the size of the blocks in Figure 17 is too small to permit detailed illustration of this relatively large group of selection item images, in implementation, the level of magnification of the images is such that the identity of the movie can be discerned by its associated image, even if some or all of the text may be too small to be easily read.

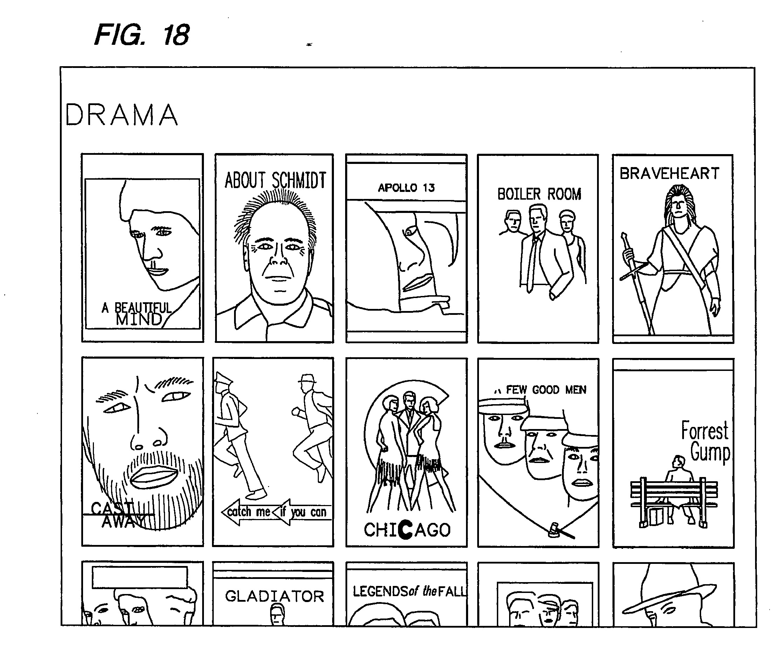

The cursor (not shown in Figure 17) can then be disposed over a group of the movie images and the input device actuated to provide a selection indication for one of the groups. In this example the user selects the drama group and the graphical user interface then displays a zoomed version of the drama group of images as seen in Figure 18. As with the previous embodiment, a transition effect can also be displayed as the GUI shifts from the GUI screen of Figure 17 to the GUI screen of Figure 18, e.g., the GUI may pan the view from the center of the GUI screen of Figure 17 to the center of the drama group of images during or prior to the zoom. Note that although the zoomed version of the drama group of Figure 18 only displays a subset of the total number of images in the drama group, that this zoomed version can alternatively contain all of the images in the selected group. The choice of whether or not to display all of the images in a selected group in any given zoomed in version of a GUI screen can be made based upon, for example, the number of media items in a group and a minimum desirable magnification level for a media item for a particular zoom level. This latter characteristic of GUIs according to the present invention can be predetermined by the system designer/service provider or can be user customizable via software settings in the GUI. For example, the number of media items in a group and the minimum and/or maximum magnification levels can be configurable by either or both of the service provider or the end user. Such features enable those users with, for example, poor eyesight, to increase the magnification level of media items being displayed. Conversely, users with especially keen eyesight may decrease the level of magnification, thereby increasing the number of media items displayed on a GUI screen at any one time and decrease browsing time.

One exemplary transition effect which can be employed in graphical user interfaces according to the present invention is referred to herein as the "shoe-to-detail" view effect. When actuated, this transition effect takes a zoomed out image and simultaneously shrinks and translates the zoomed out image into a smaller view, i.e., the next higher level of magnification. The transition from the magnification level used in the GUI screen of Figure 17 to the greater magnification level used in the GUI screen of Figure 18 results in additional details being revealed by the GUI for the images which are displayed in the zoomed in version of Figure 18. The GUI selectively reveals or hides details at each zoom level based upon whether or not those details would display well at the currently selected zoom level. Unlike a camera zoom, which attempts to resolve details regardless of their visibility to the unaided eye, exemplary embodiments of the present invention provide for a configurable zoom level parameter that specifies a transition point between when to show the full image and when to show a version of the image with details that are withheld. The transition point can be based upon an internal resolution independent depiction of the image rather the resolution of TV/Monitor 212. In this way, GUIs according to the present invention are consistent regardless of the resolution of the display device being used in the media system.

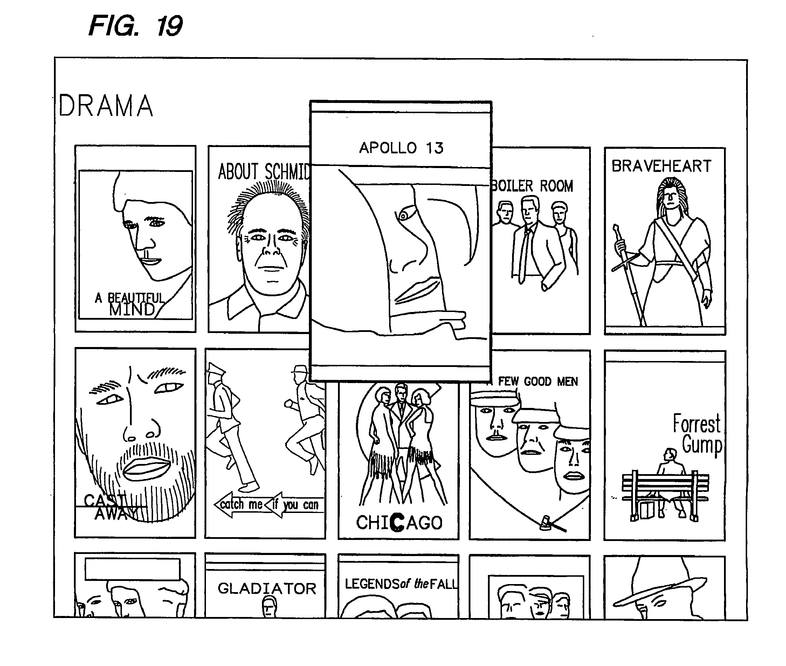

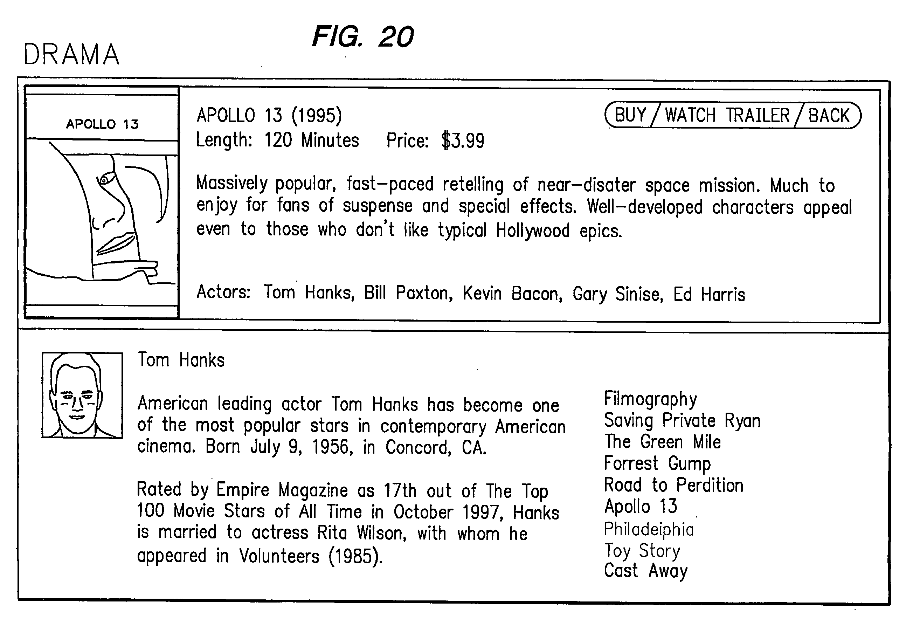

In this exemplary embodiment, an additional amount of magnification for a particular image can be provided by passing the cursor over a particular image. This feature can be seen in Figure 19, wherein the cursor has rolled over the image for the movie "Apollo 13". Although not depicted in Figure 19, such additional magnification could, for example, make more legible the quote "Houston, we have a problem" which appears on the cover art of the associated media item as compared to the corresponding image in the GUI screen of Figure 18 which is at a lower level of magnification. User selection of this image, e.g., by depressing a button on the input device, can result in a further zoom to display the details shown in Figure 20. This provides yet another example of semantic zooming as it was previously described since various information and control elements are present in the GUI screen of Figure 20 that were not available in the GUI screen of Figure 19. For example, information about the movie "Apollo 13" including, among other things, the movie's runtime, price and actor information is shown. Those skilled in the art will appreciate that other types of information could be provided here. Additionally, this GUI screen includes GUI control objects including, for example, button control objects for buying the movie, watching a trailer or returning to the previous GUI screen (which could also be accomplished by depressing the ZOOM OUT button on the input device). Hyperlinks can also be used to allow the user to jump to, for example, GUI screens associated with the related movies identified in the lower right hand corner of the GUI screen of Figure 20 or information associated with the actors in this movie. In this example, some or all of the film titles under the heading "Filmography" can be implemented as hyperlinks which, when actuated by the user via the input device, will cause the GUI to display a GUI screen corresponding to that of Figure 20 for the indicated movie.

A transition effect can also be employed when a user actuates a hyperlink. Since the hyperlinks may be generated at very high magnification levels, simply jumping to the linked media item may cause the user to lose track of where he or she is in the media item selection "map". Accordingly, exemplary embodiments of the present invention provide a transition effect to aid in maintaining the user's sense of geographic position when a hyperlink is actuated. One exemplary transition effect which can be employed for this purpose is a hop transition. In an initial phase of the transition effect, the GUI zooms out and pans in the direction of the item pointed to by the hyperlink. Zooming out and panning continues until both the destination image and the origination image are viewable by the user. Using the example of Figure 20 once again, if the user selects the hyperlink for "Saving Private Ryan", then the first phase of the hyperlink hop effect would include zooming out and panning toward the image of "Saving Private Ryan" until both the image for "Saving Private Ryan" and "Apollo 13" were visible to the user. At this point, the transition effect has provided the user with the visual impression of being moved upwardly in an arc toward the destination image. Once the destination image is in view, the second phase of the transition effect gives the user the visual impression of zooming in and panning to, e.g., on the other half of the arc, the destination image. The hop time, i.e., the amount of time both phases one and two of this transition effect are displayed, can be fixed as between any two hyperlinked image items. Alternatively, the hop time may vary, e.g., based on the distance traveled over the GUI. For example, the hop time can be parameterized as HopTime = A log(zoomed-in scale level/hop apex scale level) + B(distance between hyperlinked media items) + C, where A, B and C are suitably selected constant values.

The node watcher algorithm described above with respect to Figures 9-13(b) can also be used to aid in the transition between the zoom level depicted in the exemplary GUI screen of Figure 19 and the exemplary GUI screen of Figure 20. The rendering of GUI screens containing text and/or control elements which are not visible in other zoom level versions of the selected image may be more computationally and/or memory intensive than the images at lower magnification levels. Accordingly, the node watcher algorithm can be used in exemplary embodiments of the present invention to aid in pre-loading of GUI screens such as that shown in Figure 20 by watching the navigation code of the GUI to more rapidly identify the particular media item being zoomed in on.

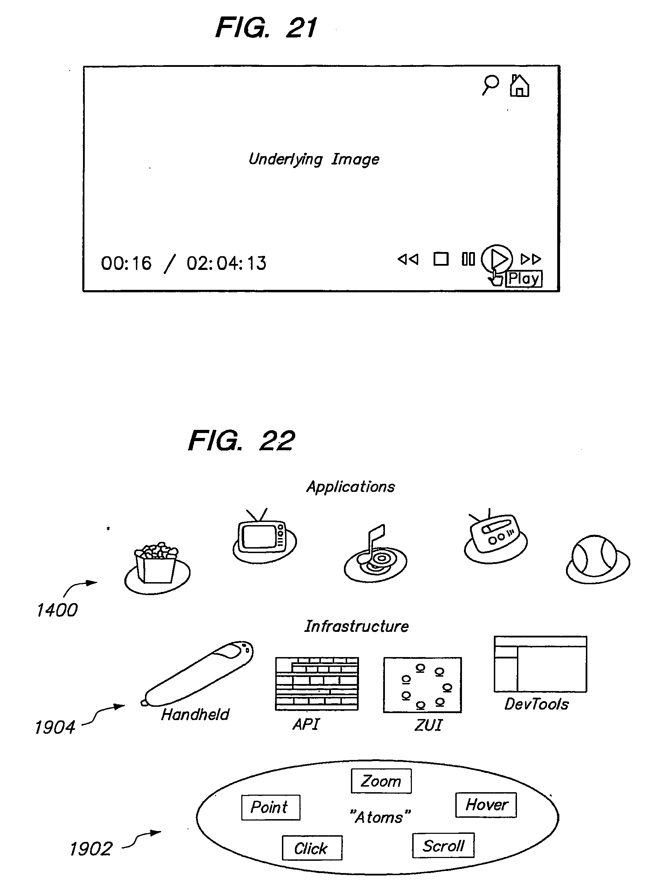

Included in exemplary implementations of the present invention are screen-location and semantically-based navigation controls. These control regions appear when the user positions the cursor near or in a region associated with those controls on a screen where those controls are appropriate as shown in Figure 21. For example, when playing a movie, the so-called trick functions of Fast Forward, Rewind, Pause, Stop and so on are semantically appropriate. In this exemplary embodiment, the screen region assigned to those functions is the lower right corner and when the cursor is positioned near or in that region, the set of icons for those trick functions appear. These icons then disappear when the function engaged is clearly completed or when the cursor is repositioned elsewhere on the screen. The same techniques can also be used to cover other navigational features like text search and home screen selection. In this exemplary implementation, these controls are semantically relevant on all screens and the region assigned to them is the upper right corner. When the cursor is positioned near or in that region, the set of icons for those navigational controls appear. These icons then disappear when the function is activated or the cursor is repositioned elsewhere on the screen. Note that for user training purposes, the relevant control icons may initially optionally appear briefly (e.g., 5 seconds) on some or all of the relevant screens in order to alert the inexperienced user to their presence.

Having provided some examples of zoomable graphical user interfaces according to the present invention, exemplary frameworks and infrastructures for using such interfaces will now be described. Figure 22 provides a framework diagram wherein zoomable interfaces associated with various high level applications 1900, e.g., movies, television, music, radio and sports, are supported by primitives 1902 (referred to in the Figure as "atoms"). In this exemplary embodiment, primitives 1902 include POINT, CLICK, ZOOM, HOVER and SCROLL, although those skilled in the art will appreciate that other primitives may be included in this group as well, e.g., PAN and DRAG. As described above the POINT and CLICK primitives operate to determine cursor location and trigger an event when, for example, a user actuates the ZOOM IN or ZOOM OUT button on the handheld input device. These primitives simplify navigation and remove the need for repeated up-down-right-left button actions. As illustrated above, the ZOOM primitive provides an overview of possible selections and gives the user context when narrowing his or her choices. This concept enables the interface to scale to large numbers of media selections and arbitrary display sizes. The SCROLL primitive handles input from the scroll wheel input device on the exemplary handheld input device and can be used to, for example, accelerates linear menu navigation. The HOVER primitive dynamically enlarges the selections underneath the pointer (and/or changes the content of the selection) to enable the user to browse potential choices without committing. Each of the aforedescribed primitive operations can be actuated in GUIs according to the present invention in a number of different ways. For example, each of POINT, CLICK, HOVER, SCROLL and ZOOM can be associated with a different gesture which can be performed by a user. This gesture can be communicated to the system via the input device, whether it be a free space pointer, trackball, touchpad, etc. and translated into an actuation of the appropriate primitive. Likewise, each of the primitives can be associated with a respective voice command.

Between the lower level primitives 1902 and the upper level applications 1900 reside various software and hardware infrastructures 1904 which are involved in generating the images associated with zoomable GUIs according to the present invention. As seen in Figure 22, such infrastructures 1904 can include a handheld input device/pointer, application program interfaces (APIs), zoomable GUI screens, developers' tools, etc.

The foregoing exemplary embodiments are purely illustrative in nature. The number of zoom levels, as well as the particular information and controls provided to the user at each level may be varied. Those skilled in the art will appreciate that the present invention provides revolutionary techniques for presenting large and small sets of media items using a zoomable interface such that a user can easily search through, browse, organize and play back media items such as movies and music. Graphical user interfaces according to the present invention organize media item selections on a virtual surface such that similar selections are grouped together. Initially, the interface presents a zoomed out view of the surface, and in most cases, the actual selections will not be visible at this level, but rather only their group names. As the user zooms progressively inward, more details are revealed concerning the media item groups or selections. At each zoom level, different controls are available so that the user can play groups of selections, individual selections, or go to another part of the virtual surface to browse other related media items. Zooming graphical user interfaces according to exemplary embodiments of the present invention can contain categories of images nested to an arbitrary depth as well as categories of categories. The media items can include content which is stored locally, broadcast by a broadcast provider, received via a direct connection from a content provider or on a peering basis. The media items can be provided in a scheduling format wherein date/time information is provided at some level of the GUI. Additionally, frameworks and GUIs according to exemplary embodiments of the present invention can also be applied to television commerce wherein the items for selection are being sold to the user.

The above-described exemplary embodiments are intended to be illustrative in all respects, rather than restrictive, of the present invention. Thus the present invention is capable of many variations in detailed implementation that can be derived from the description contained herein by a person skilled in the art. All such variations and modifications are considered to be within the scope and spirit of the present invention as defined by the following claims. No element, act, or instruction used in the description of the present application should be construed as critical or essential to the invention unless explicitly described as such. Also, as used herein, the article "a" is intended to include one or more items.

In summary, the subject matter described in the following paragraphs, which are numbered to allow easy reference, is part of the disclosure of the present application, each of which can be claimed in the present application, and in one or more future divisional applications there from:
(1) A control framework for organizing, selecting and launching media items comprising:
   means for organizing said media items; means for pointing to one of said media items;
   means for selecting one of a plurality of different semantic levels associated with said one of said media items; and means for launching said one of said media items at said selected one of said plurality of different semantic levels.
(2) The control framework of paragraph 1, wherein said means for pointing to one of said media items includes a freespace pointer.
(3) The control framework of paragraph 1, wherein said means for pointing to one of said media items includes a trackball.
(4) The control framework of paragraph 1, wherein said means for pointing to one of said media item includes a voice recognition unit.
(5) The control framework of paragraph 1, wherein said means for pointing to one of said media items includes a gesture recognition unit.
(6) The control framework of paragraph 1, wherein said means for selecting one of a plurality of different semantic levels further comprises: a display unit for displaying objects including selection objects associated with said media items; and a zoomable graphical user interface for generating said selection objects at said plurality of different semantic levels.
(7) The control framework of paragraph 6, wherein at a first semantic level a first set of predetermined information objects is visible and at a second semantic level a second set of predetermined information objects is visible.
(8) The control framework of paragraph 7, wherein at said first semantic level a selection option is not available for user selection and at said second semantic level said selection option is available for user selection.
(9) The control framework of paragraph 1, wherein said means for organizing further comprises: a set of icons each of which is associated with a particular media category, wherein selection of one of said icons results in the display of a plurality of selection items within a respective media category.
(10) A control framework comprising: a display screen for displaying graphical user interface objects; an input device for providing user input to a graphical user interface; and a graphical user interface for coordinating display of said graphical user interface objects on said display screen, said graphical user interface including: means for detecting when a position indicated on the screen by said input device is stationary for a predetermined period of time and to display additional images and/or text on the screen in response thereto; means for zooming from one image scope to another image scope based on first input from said input device; means for selecting one of said graphical user interface objects based on second input from said input device; means for moving a selection target through a list of screen positions based on third input from said input device; and means for initiating an action in said graphical user interface framework based on said indicated position and fourth input from said input device.
(11) The control framework of paragraph 10, wherein the input device includes a freespace pointer.
(12) The control framework of paragraph 10, wherein the input device includes a trackball.
(13) The control framework of paragraph 10, wherein the input device includes a touchpad.
(14) The control framework of paragraph 10, wherein the input device includes a television remote control device.
(15) The control framework of paragraph 10, wherein at least one of said first, second, third and fourth inputs is a speech command.
(16) The control framework of paragraph 10, wherein at least one of said first, second, third and fourth inputs is a gesture.
(17) The control framework of paragraph 10, wherein the means for moving a selection target includes a touchpad and said third input is a movement on said touchpad.
(18) The control framework of paragraph 10, wherein said means for displaying additional images and/or text further comprises means for receiving a gesture input associated with a hover function.
(19) The control framework of paragraph 10, wherein said first input of said means for zooming is one of a gesture or a speech command.
(20) The control framework of paragraph 10, wherein the display screen is a television.
(21) A media system comprising: a television having a display screen; a pointing device for providing input to said television, said input based, at least in part, on movement of said pointing device; and a system controller for receiving said input and controlling media content displayed on said display screen based on said input, wherein said system controller includes memory for storing software code associated with primitives for controlling said media content display, and wherein: a first one of said primitives is a scroll primitive, such that said system controller scrolls media content displayed on said display screen of said television responsive to a first input from said pointing device; and a second one of said primitives is a hover primitive, such that said system controller alters a display of said media content displayed on said display screen of said television when said cursor hovers over a portion of said display screen for a predetermined period of time.
(22) The media system of paragraph 21, wherein a third one of said primitives is a point primitive which generates a cursor on said display screen of said television, a position of said cursor being based on movement of said pointing device.
(23) The media system of paragraph 21, wherein said pointing device has at least one button and wherein one of said primitives is a click primitive which indicates actuation of said at least one button.
(24) The media system of paragraph 21, wherein said pointing device includes a scroll wheel.
(25) The media system of paragraph 21, wherein said system controller alters said display of said media content by magnifying media content associated with said portion of said display screen.
(26) The media system of paragraph 21, wherein a third one of said primitives is a zoom primitive, such that said system controller changes a magnification of said media content displayed on said display screen of said television based on a second input from said pointing device.
(27) The media system of paragraph 26, wherein said change in said magnification includes changing from a first magnification level to a second magnification level, wherein information is visible at said second magnification level that was not visible or appropriate at said first magnification level.
(28) The media system of paragraph 21, wherein the pointing device includes a trackball.
(29) The media system of paragraph 21, wherein the pointing device includes a touchpad.
30) The media system of paragraph 21, wherein the pointing device includes a television remote control device.
(31) The media system of paragraph 21, wherein the pointing device includes a freespace pointing device.
(32) The media system of 21, wherein at least one of said scroll primitive and said hover primitive are actuated in response to a speech command.
(33) The media system of paragraph 21, wherein at least one of said scroll primitive and said hover primitive are actuated in response to a gesture.
(34) A media system comprising: a television; a free space pointing device for providing input to said television, said input based, at least in part, on movement of said free space pointing device; and a system controller for receiving said input and controlling media content displayed on said television based on said input, wherein said system controller includes memory for storing software code associated with primitives for controlling said media content display.
(35) The media system of paragraph 34, wherein one of said primitives is a scroll primitive, such that said system controller scrolls media content displayed on said television responsive to a first input from said free space pointing device.
(36) The media system of paragraph 37, wherein one of said primitives is a hover primitive, such that said system controller alters a display of said media content displayed on said television when said cursor hovers over a portion of said television screen for a predetermined period of time.
(38) The media system of paragraph 34, wherein one of said primitives is a point primitive which generates a cursor on said television, a position of said cursor being based on movement of said free space pointing device.
(39) The media system of paragraph 34, wherein said free space pointing device has at least one button and wherein one of said primitives is a click primitive which indicates actuation of said at least one button.
(40) The media system of paragraph 35, wherein said free space pointing device includes a scroll wheel.
(41) The media system of paragraph 36, wherein said system controller alters said display of said media content by magnifying media content associated with said portion of said display screen.
(42) The media system of paragraph 34, wherein one of said primitives is a zoom primitive, such that said system controller changes a magnification of said media content displayed on said television based on an input from said free space pointing device.
(43) The media system of paragraph 42, wherein said change in said magnification includes changing from a first magnification level to a second magnification level, wherein information is visible at said second magnification level that was not visible at said first magnification level.
(44) The media system of 34, wherein at least one of primitives are actuated in response to a speech command.
(45) The media system of paragraph 34, wherein at least one of said primitives are actuated in response to a gesture.
(46) The media system of paragraph 34, wherein said free space pointing device is freely movable in front of said television and wherein said system controller translates movement of said free space pointing device directly into a cursor location without use of a proxy surface.
(47) A method for displaying information on a graphical user interface comprising the steps of: displaying a first plurality of images at a first magnification level; receiving a first selection indication that identifies a subset of said plurality of images; displaying a first zoomed version of said selected subset of said plurality of images at a second magnification level; receiving a second selection indication that identifies an image within said subset of images; and displaying a second zoomed version of said identified image, wherein said second zoomed version of said identified image includes at least one user-actuable control element.
(48) The method of paragraph 47, further comprising the step of: displaying a cursor which can move over said plurality of images, wherein said first and second selection indications are based on a position of said cursor.
(49) The method of paragraph 47, further comprising the step of: providing a transition effect between said steps of displaying said first zoomed version and said step of displaying said second zoomed version.
(50) The method of paragraph 47, wherein said first step of displaying further comprises: grouping each of said plurality of images by category into a plurality of groups.
(51) The method of paragraph 50, wherein said first step of displaying further comprises the step of: providing categories of movie genres including action, drama and comedy categories and co-locating said displayed images by movie genre category.
(52) The method of paragraph 47, wherein said first step of displaying further comprises the step of: providing categories of music genres including country, blues and jazz and co-locating said displayed images by music genre category.
(53) The method of paragraph 47, wherein said plurality of images are images of cover art, each of which are associated with a media item.
(54) The method of paragraph 50, wherein said first step of displaying further comprises the step of uniformly grouping said images such that each group has substantially the same display area.
(55) The method of paragraph 50, wherein said first step of displaying further comprises the step of: grouping said images such that at least two of said groups have a different display area relative to one another.
(56) The method of paragraph 54, wherein said display areas are rectangular.
(57) The method of paragraph 55, wherein said display areas are rectangular.
(58) The method of paragraph 47 wherein said step of receiving a first selection indication further comprises the step of: receiving at least one signal from a pointing device indicating a selection and a location of a cursor.
(59) The method of paragraph 58, wherein said pointing device is a wireless pointing device.
(60) The method of paragraph 49, wherein said step of providing a transition effect further comprises the step of: shrinking and translating the first zoomed version of said identified image.
(61) The method of paragraph 47, further comprising the step of: organizing a collection of images to selectively generate said first plurality of images which is a subset of said collection of images.
(62) The method of paragraph 61, wherein said step of organizing further comprises the steps of: displaying, prior to displaying said first plurality of images, a set of icons, each of said icons representing a subset of said collection of images; and receiving a third selection indication that identifies one of said icons.
(63) The method of paragraph 61, wherein said step of organizing further comprises the steps of: displaying, prior to displaying said first plurality of images, a second plurality of images which includes said first plurality of images at a third magnification level which is less than said first magnification level; and receiving a third selection indication that identifies said first plurality of images.
(64) The method of paragraph 47, wherein said identified image is a movie cover art image and said second zoomed version of said identified image includes an information element which is selected from the group of: movie run time, price and actor information.
(65) The method of paragraph 47, wherein said control element is a button which can be actuated to purchase a movie associated with said identified image.
(66) The method of paragraph 47, wherein said control element is a hyperlink to information associated with other movies related to a movie associated with said identified image.
(67) The method of paragraph 47, wherein said control element is not visible in said first zoomed version.
(68) The method of paragraph 65, wherein said information element is not visible in said first zoomed version.
(69) A graphical user interface (GUI) comprising: a first GUI screen which displays a first plurality of images at a first magnification level; means for receiving a first selection indication that identifies a subset of said plurality of images; a second GUI screen which displays a first zoomed version of said selected subset of said plurality of images at a second magnification level; means for receiving a second selection indication that identifies an image within said subset of images; and a third GUI screen which displays a second zoomed version of said identified image, wherein said second zoomed version of said identified image includes at least one user-actuable control element.
(70) The GUI of paragraph 69, further comprising: means for displaying a cursor which can move over said plurality of images, wherein said first and second selection indications are based on a position of said cursor.
(71) The GUI of paragraph 69, further comprising: means for providing a transition effect between said steps of displaying said first zoomed version and said step of displaying said second zoomed version.
(72) The GUI of paragraph 69, wherein said first GUI screen displays each of said plurality of images by category in a plurality of groups.
(73) The GUI of paragraph 72, wherein said categories are movie genres including action, drama and comedy categories and displayed images are co-located on said first GUI screen by movie genre category.
(74) The GUI of paragraph 72, wherein said categories are music genres including country, blues and jazz and said displayed images are co-located on said first GUI screen by music genre category.
(75) The GUI of paragraph 69, wherein said first plurality of images are images of cover art, each of which are associated with a media item.
(76) The GUI of paragraph 72, wherein said first GUI screen uniformly groups said images such that each group has substantially the same display area on said first GUI screen.
(77) The GUI of paragraph 72, wherein said first GUI screen displays said plurality of groups such that at least two of said groups have a different display area relative to one another.
(78) The GUI of paragraph 76, wherein said display areas are rectangular.
(79) The GUI of paragraph 77, wherein said display areas are rectangular.
(80) The GUI of paragraph 69, wherein said means for receiving said first selection indication further comprises: means for receiving at least one signal from a pointing device indicating a selection and a location of a cursor.
(81) The GUI of paragraph 80, wherein said pointing device is a wireless, freespace pointing device.
(82) The GUI of paragraph 71, wherein said means for providing a transition effect further comprises: means for shrinking and translating the first zoomed version of said identified image.
(83) The GUI of paragraph 70, further comprising means for organizing a collection of images to selectively generate said first plurality of images which is a subset of said collection of images.
(84) The GUI of paragraph 83, wherein said means for organizing further comprises: a fourth GUI screen, which displays, prior to displaying said first GUI screens, a set of icons, each of said icons representing a subset of said collection of images; and means for receiving a third selection indication that identifies one of said icons.
(85) The GUI of paragraph 83, wherein said means for organizing further comprises: a fourth GUI screen which displays, prior to displaying said first GUI screen, a second plurality of images which includes said first plurality of images at a third magnification level which is less than said first magnification level; and means for receiving a third selection indication that identifies said first plurality of images.
(86) The GUI of paragraph 69, wherein said identified image is a movie cover art image and said second zoomed version of said identified image includes an information element which is selected from the group of: movie run time, price and actor information.
(87) The GUI of paragraph 69, wherein said control element is a button which can be actuated to purchase a movie associated with said identified image.
(88) The GUI of paragraph 69, wherein said control element is a hyperlink to information associated with other movies related to a movie associated with said identified image.
(89) The GUI of paragraph 69, wherein said control element is not visible in said first zoomed version.
(90) The GUI of paragraph 86, wherein said information element is not visible in said first zoomed version.
(91) A set-top box comprising: a processor for receiving media input, controlling media output and generating a zoomable graphical user interface (GUI); and said GUI enabling a user to select a media item from among a plurality of media items for output to one of audio/video output devices, said GUI including: a first GUI screen which displays a first plurality of images at a first magnification level; means for receiving a first selection indication that identifies a subset of said plurality of images; a second GUI screen which displays a first zoomed version of said selected subset of said plurality of images at a second magnification level; means for receiving a second selection indication that identifies an image within said subset of images; and a third GUI screen which displays a second zoomed version of said identified image, wherein said second zoomed version of said identified image includes at least one user-actuable control element.
(92) The set-top box of paragraph 71, further comprising: means for displaying a cursor which can move over said plurality of images, wherein said first and second selection indications are based on a position of said cursor.
(93) The set-top box of paragraph 71, further comprising: means for providing a transition effect between said steps of displaying said first zoomed version and said step of displaying said second zoomed version.
(94) The set-top box of paragraph 71, wherein said first GUI screen displays each of said plurality of images by category in a plurality of groups.
(95) The set-top box of paragraph 94, wherein said categories are movie genres including action, drama and comedy categories and displayed images are co-located on said first GUI screen by movie genre category.
(96) The set-top box of paragraph 94, wherein said categories are music genres including country, blues and jazz and said displayed images are co-located on said first GUI screen by music genre category.
(97) The set-top box of paragraph 91, wherein said first plurality of images are images of cover art, each of which is associated with a media item.
(98) The set-top box of paragraph 94, wherein said first GUI screen uniformly groups said images such that each group has substantially the same display area on said first GUI screen.
(99) The set-top box of paragraph 94, wherein said first GUI screen displays said plurality of groups such that at least two of said groups have a different display area relative to one another.
(100) The set-top box of paragraph 99, wherein said display areas are rectangular.
(101) The set-top box of paragraph 99, wherein said display areas are rectangular.
(102) The set-top box of paragraph 91, wherein said means for receiving said first selection indication further comprises: means for receiving at least one signal from a pointing device indicating a selection and a location of a cursor.
(103) The set-top box of paragraph 102, wherein said pointing device is a wireless, freespace pointing device.
(104) The set-top box of paragraph 91, wherein said means for providing a transition effect further comprises: means for shrinking and translating the first zoomed version of said identified image.
(105) The set-top box of paragraph 91, further comprising means for organizing a collection of images to selectively generate said first plurality of images which is a subset of said collection of images.
(106) The set-top box of paragraph 105, wherein said means for organizing further comprises: a fourth GUI screen, which displays, prior to displaying said first GUI screens, a set of icons, each of said icons representing a subset of said collection of images; and means for receiving a third selection indication that identifies one of said icons.
(107) The set-top box of paragraph 95, wherein said means for organizing further comprises: a fourth GUI screen which displays, prior to displaying said first GUI screen, a second plurality of images which includes said first plurality of images at a third magnification level which is less than said first magnification level; and means for receiving a third selection indication that identifies said first plurality of images.
(108) The set-top box of paragraph 91, wherein said identified image is a movie cover art image and said second zoomed version of said identified image includes an information element which is selected from the group of: movie run time, price and actor information.
(109) The set-top box of paragraph 91, wherein said control element is a button which can be actuated to purchase a movie associated with said identified image.
(110) The set-top box of paragraph 91, wherein said control element is a hyperlink to information associated with other movies related to a movie associated with said identified image.
(111) The set-top box of paragraph 91, wherein said control element is not visible in said first zoomed version.
(112) The set-top box of paragraph 109, wherein said information element is not visible in said first zoomed version.
(113) A method for displaying information on a graphical user interface comprising the steps of: displaying a plurality of images at a first magnification level; receiving a selection indication that identifies at least one of said subset of said plurality of images; and displaying a zoomed version of said at least one identified image, wherein said zoomed version of said at least one identified image includes at least one user-actuable control element which was not available at said first magnification level.
(114) A graphical user interface (GUI) comprising: a first GUI for displaying a plurality of objects at a first magnification level; means for receiving a selection indication associated with at least one of said plurality of objects; and a second GUI screen for displaying said at least one of plurality of objects at a second magnification level, wherein at said second magnification level a user-actuable control element is available that was unavailable at said first level of magnification.
(115) In control framework having a plurality of nodes, a subset of said plurality of nodes associated with a displayed portion of a graphical user interface (GUI), a method for tracking said plurality of nodes comprising the steps of: maintaining a data structure which contains boundary information associated with each of said subset of nodes; changing said displayed portion of said GUI from a first portion to a second portion; and evaluating said data structure based upon said changing step to determine whether a node has moved into or out of said displayed portion of said GUI.
(116) The method of paragraph 115, wherein said each of said plurality of nodes is a user interface object.
(117) The method of paragraph 116, wherein at least some of said user interface objects are associated with software applications.
(118) The method of paragraph 115, wherein said step of maintaining a data structure further comprises the step of: maintaining a linked list of transition blocks, each of said transition blocks being associated with a boundary of one of said nodes in said subset of nodes.
(119) The method of paragraph 115, wherein said step of maintaining a data structure further comprises the step of: maintaining a plurality of linked lists, each associated with one of a plurality of different dimensions.
(120) The method of paragraph 119, wherein said plurality of different dimensions include at least one of horizontal, vertical and depth dimensions.
(121) The method of paragraph 119, wherein said plurality of different dimensions include time.
(122) The method of paragraph 119, wherein said plurality of different dimensions include at least one of content type and content rating.
(123) The method of paragraph 115, wherein said boundary information includes locations of boundary shape edges.
(124) The method of paragraph 123, wherein said boundary shapes are rectangles.
(125) The method of paragraph 115, wherein said step of changing said displayed portion of said GUI further comprises the step of: zooming into or out of said GUI.
(126) The method of paragraph 115, wherein said step of changing said displayed portion of said GUI further comprises the step of: panning from said first portion to said second portion of said GUI.
(127) The method of paragraph 115, wherein said step of changing said displayed portion of said GUI further comprises the step of: operating a filter to move from said first portion of said GUI to said second portion of said GUI.
(128) The method of paragraph 115, wherein said step of evaluating said data structure further comprises the step of: changing a pointer to point at a portion of said data structure which is outside of said second portion of said GUI.
(129) The method of paragraph 115, wherein said step of evaluating said data structure further comprises the step of: determining whether to notify one of said plurality of nodes based on at least one of: a node side, a view side and a view move direction.
(130) The method of paragraph 128, wherein said step of evaluating said data structure further comprises the step of: determining, for each block in said data structure passed by said pointer, whether to notify a corresponding one of said plurality of nodes based on at least one of: a node side, a view side and a view move direction.
(131) The method of paragraph 115, further comprising the step of: selectively notifying said node based on a result of said evaluating step.
(132) The method of paragraph 131, wherein said step of selectively notifying further comprises the step of: notifying said node if it partially intersects with said second portion of said GUI.
(133) The method of paragraph 131, wherein said step of selectively notifying further comprises the step of: notifying said node only if it fully intersects with said second portion of said GUI.
(134) The method of paragraph 131, wherein said step of selectively notifying further comprises the step of: notifying said node if it intersects with said second portion of said GUI after evaluating a plurality of data structures associated with a plurality of dimensions.
(135) The method of paragraph 115, further comprising the step of: activating a function associated with said node if said node has moved into or out of said displayed portion of said GUI.
(136) The method of paragraph 151, wherein said function is launching a software application if said node has moved into said displayed portion of said GUI.
(137) A method for displaying an interface object on a graphical user interface (GUI) comprising the steps of: displaying said interface object at one of a plurality of magnification levels; hiding at least one detail of said interface object at said one of said plurality of magnification levels; displaying said interface object at another of said plurality of magnification levels; and revealing said at least one detail of said interface object at said a predetermined another of said plurality of magnification levels, regardless of a resolution at which said interface object is displayed.
(138) The method of paragraph 137, wherein said at least one detail is a segment of text which is clipped from said interface object when displayed at said one of said plurality of magnification levels.
(139) The method of paragraph 137, wherein said at least one detail is a hyperlink.
(140) The method of paragraph 137, wherein said at least one detail is another interface object.
(141) The method of paragraph 137, further comprising the steps of: maintaining a data structure which contains information associated with a local coordinate system for said interface object; transforming said local coordinate system using a transform matrix to generate a resolution independent data set for said interface object; and mapping said resolution independent data set to pixels associated with a currently displayed portion of said GUI.
(142) The method of paragraph 141, wherein said step of revealing further comprises the step of: revealing said at least one detail of said interface object if a number of said pixels in a predetermined dimension exceeds a threshold number of pixels.
(143) A graphical user interface (GUI) comprising: a first plurality of graphical user interface objects, each representing a media item, displayed at a first zoom level; means for receiving a selection indication associated with one of said first plurality of graphical user interface objects; and means for zooming in on, and panning toward, said one of said first plurality of graphical user interface objects to display at least said one of said first plurality of graphical user interface objects at a second zoom level, wherein said at said second zoom level said one of said first plurality of graphical user interface objects includes different content than said one of said first plurality of graphical user interface objects at said first zoom level.
(144) The graphical user interface of paragraph 143, wherein said second zoom level exceeds a semantic zoom threshold.
(145) The GUI of paragraph 143, wherein said different content is additional text information which was not visible at said first zoom level.
(146) The GUI of paragraph 143, wherein said different content includes at least one GUI control object which was not visible at said first zoom level.
(147) The GUI of paragraph 146, wherein said at least one GUI control object is a hyperlink which provides a link to a different media item.
(148) The GUI of paragraph 146, wherein said at least one GUI control object is a control object which, when actuated, causes said GUI to play said media item.
(149) The GUI of paragraph 143, further comprising: means for maintaining a data structure which contains information associated with a local coordinate system for said interface object; means for transforming said local coordinate system using a transform matrix to generate a resolution independent data set for said interface object; and means for mapping said resolution independent data set to pixels associated with a currently displayed portion of said GUI.
(150) The GUI of paragraph 143, wherein said media item is one of a movie, a song and a television channel.
(151) A method for media item selection in a media system comprising the steps of: displaying a plurality of media items as images on a display screen of said media system; receiving user input to said media system; zooming in on said plurality of media items based on said user input until at least one control object is visible on said display screen; and operating, by said user, one of said control objects to select a corresponding media item.
(152) The method of paragraph 151, wherein said step of zooming further comprises the step of: zooming in steps between predetermined magnification levels, wherein each step is associated with a corresponding user input.
(153) The method of paragraph 152, wherein one of said predetermined magnification levels represents a semantic zooming threshold and wherein said at least one control object becomes visible on said display screen when said semantic zooming threshold is reached.
(154) The method of paragraph 153, wherein said semantic zooming threshold is independent of a resolution of said display screen.
(155) The method of paragraph 151, wherein said plurality of media items represent at least one of movies, songs and television channels.
(156) A media controller comprising: a processor for displaying a plurality of media items as images on a display screen; an input port for receiving input; means for zooming in on said plurality of media items based on a first input until at least one control object is visible on said display screen; and means for playing a media item associated with said at least one control object in response to a second input.
(157) The media controller of paragraph 156, wherein said means for zooming further comprises: means for zooming in steps between predetermined magnification levels, wherein each step is performed in response to a received input.
(158) The media controller of paragraph 157, wherein one of said predetermined magnification levels represents a semantic zooming threshold and wherein said at least one control object becomes visible on said display screen when said semantic zooming threshold is reached.
(159) The media controller of paragraph 158, wherein said semantic zooming threshold is independent of a resolution of said display screen.
(160) The media controller of paragraph 156, wherein said plurality of media items represent at least one of movies, songs and television channels.

## Claims

1. A method for interfacing with a plurality of images, wherein each of said plurality of images represents a selectable media item, the method comprising:
displaying said plurality of images aligned relative to one another in rows and columns at a first semantic level of a user interface;
moving a cursor over one of said plurality of images;
enlarging said one of said plurality of images in response to said cursor movement, wherein said one of said plurality of images overlaps at least one of said plurality of images at said first semantic level of said user interface;
displaying said one of said plurality of images together with additional information associated with said one of said plurality of images while non-displaying the remaining of said plurality of images, after enlarging said one of said plurality of images and prior to launching a media item represented by said one of said plurality of images;
receiving a selection input associated with said one of said plurality of images; and
launching said media item represented by said one of said plurality of images.

2. The method of claim 1, wherein said enlarging of said one of said plurality of images indicates that said one of said plurality of images currently has a focus of an interface and that said a media item represented by said one of said plurality of images can be selected.

3. The method of claim 1, wherein said step of displaying additional information associated with said one of said plurality of images after enlarging said one of said plurality of images and prior to launching a media item represented by said one of said plurality of images further comprises:
displaying said one of said plurality of images at a second semantic level of said user interface including, as said additional information, information associated with said media item represented by said one of said plurality of images.

4. The method of claim 3, further comprising:
providing a transition effect between said display of said one of said plurality of images at said first semantic level of said user interface and said display of said one of said plurality of images at said second semantic level of said user interface.

5. The method of claim 4, wherein said step of providing a transition effect further comprises:
transitioning from said first semantic level at which said one of said plurality of images is displayed to said second semantic level by:
simultaneously changing a size of said one of said plurality of images and translating said one of said plurality of images from a first location on a display to a second location, different from said first location, on said display.

6. The method of claim 5, further comprising the step of:
animating said translation of said one of said plurality of images from said first location to said second location.

7. The method of claim 1, wherein said step of displaying additional information associated with said one of said plurality of images after enlarging said one of said plurality of images and prior to launching a media item represented by said one of said plurality of images further comprises:
displaying said additional information at said first semantic level of said user interface.

8. A user interface comprising:
means for displaying said plurality of images wherein each of said plurality of images represents a selectable media item aligned relative to one another in rows and columns at a first semantic level of a user interface;
means for moving a cursor over one of said plurality of images;
means for enlarging said one of said plurality of images in response to said cursor movement, wherein said one of said plurality of images overlaps at least one of said plurality of images at said first semantic level of said user interface;
means for displaying said one of said plurality of images together with additional information associated with said one of said plurality of images while non-displaying the remaining of said plurality of images, after enlarging said one of said plurality of images and prior to launching a media item represented by said one of said plurality of images;
means for receiving a selection input associated with said one of said plurality of images; and
means for launching said media item represented by said one of said plurality of images.

9. The user interface of claim 8, wherein when said cursor is not positioned over any one of said images, none of said plurality of images overlap any other of said plurality of images.

10. The user interface of claim 8, wherein said means for enlarging of said one of said plurality of images indicates that said one of said plurality of images currently has a focus of an interface and that said media item represented by said one of said plurality of images can be selected.

11. The user interface of claim 8, wherein said means for displaying additional information associated with said one of said plurality of images after enlarging said one of said plurality of images and prior to launching a media item represented by said one of said plurality of images further comprises:
means for displaying said one of said plurality of images at a second semantic level of said user interface including, as said additional information, information associated with said media item represented by said one of said plurality of images.

12. The user interface of claim 11, further comprising:
means for providing a transition effect between said display of said one of said plurality of images at said first semantic level of said user interface and said display of said one of said plurality of images at said second semantic level of said user interface.

13. The user interface of claim 12, wherein said means for providing a transition effect further comprises:
means for transitioning from said first semantic level at which said one of said plurality of images is displayed to said second semantic level by:
means for simultaneously changing a size of said one of said plurality of images and translating said one of said plurality of images from a first location on a display to a second location, different from said first location, on said display.

14. The user interface of claim 13, further comprising:
means for animating said translation of said one of said plurality of images from said first location to said second location.

15. The user interface of claim 8, wherein said means for displaying additional information associated with said one of said plurality of images after enlarging said one of said plurality of images and prior to launching a media item represented by said one of said plurality of images further comprises:
means for displaying said additional information at said first semantic level of said user interface.
